# EUROPEAN PATENT APPLICATION

(11) **EP 4 645 954 A1**
(43) Date of publication of application: **05.11.2025**
(21) Application number: 22969609.1
(22) Date of filing: 28.12.2022
(51) Int. Cl.: H04W 36/08

(54) **CONNECTION ESTABLISHMENT METHOD AND DEVICE**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/143014
(87) International publication number: WO 2024/138458

(57) **Abstract**

Disclosed in embodiments of the present disclosure are a connection establishment method and device. The method comprises, a first node receives transport network layer configuration information, wherein the first node comprises an MT, a first DU and a second DU, the transport network layer configuration information is used for instructing the second DU to establish a connection with a third node by means of a transmission path under a host node connected to the MT, and the third node is different from a host node connected to the first DU. Therefore. the second DU of the first node can be supported to establish a connected with the third node by means of the transmission path in a topology of the host node connected to the MT, and the third node is different from the host node connected to the first DU; migration of the MT and the DU can be separated, and Fl connection establishment in various scenes is supported.

## Description

### TECHNICAL FIELD

The present disclosure relates to a field of communication technology, and specifically to a method and a device for setting up a connection.

### BACKGROUND

In an integrated access and backhaul (IAB) network architecture, a first node is an IAB-node and may provide a radio access service to user equipment (UE). The UE may be connected to a donor node via a radio backhaul link of the first node. The first node may include two functional units: IAB-mobile terminal (MT) (or referred to as a MT of the first node or IAB-MT) and IAB-distributed unit (DU) (or referred to as a DU of the first node).

A donor node connected to the first node (hereinafter referred to as donor node 1) may migrate (also known as hand over) to a new donor node (hereinafter referred to as donor node 2) along with a movement of the first node. The IAB-MT may migrate alone, or both MT and DU of the first node may migrate together. In a case where the IAB-MT migrates alone, the IAB-MT connects to the donor node 2, and the IAB-DU needs to connect to the donor node 1 via a transport path between the IAB-MT's donor node 2 and the IAB-MT. In a case where both the IAB-MT and the IAB-DU migrate together, both MT and DU connect to the donor node 2.

### SUMMARY

Embodiments of the present disclosure provide a method and a device for setting up a connection, applied to a 5G system and applicable to a scenario supporting integrated access and backhaul (IAB), which enables a second DU of a first node to set up a connection with a third node via a transport path between a MT's donor node and the MT, where the third node is different from a donor node connected to a first DU, and MT migration and DU migration may be separated, which supports to set up an F1 connection in various scenarios.

According to a first aspect, the embodiments of the present disclosure provide a method for setting up a connection, performed by a first node, including: receiving transport network layer (TNL) configuration information, in which the first node includes an MT, a first DU, and a second DU, the TNL configuration information is configured to indicate the second DU to set up a connection with a third node via a transport path between the MT's donor node and the MT, and the third node is different from a donor node connected to the first DU. Therefore, the second DU of the first node is supported to set up the connection with the third node via the transport path between the MT's donor node and the MT, where the third node is different from the donor node connected to the first DU, and MT migration and DU migration may be separated, which supports to set up an F1 connection in various scenarios.

In this technical solution, the first node receives the TNL configuration information, and the second DU of the first node may set up the connection with the third node via the transport path between the MT's donor node and the MT based on the TNL configuration information, in which the third node is different from the donor node connected to the first DU. Therefore, the second DU of the first node is supported to set up the connection with the third node via the transport path between the MT's donor node and the MT, where the third node is different from the IAB-donor connected to the first DU, and MT migration and DU migration may be separated, which supports to set up an F1 connection in various scenarios.

According to a second aspect, the embodiments of the present disclosure provide another method for setting up a connection, performed by a second node, including: sending TNL configuration information to a first node, in which the first node includes an MT, a first DU, and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

According to a third aspect, the embodiments of the present disclosure provide another method for setting up a connection, performed by a third node, including: sending first indication information to a second node, in which the first indication information is configured to indicate the second node to send TNL configuration information to a first node, the first node includes an MT, a first DU, and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

According to a fourth aspect, the embodiments of the present disclosure provide a communication device. The communication device has some or all of the functions of the first node in the method in the first aspect above, for example, the communication device may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, a structure of the communication device may include a transceiver module and a processing module, in which the processing module is configured to support the communication device to perform corresponding functions in above method, and the transceiver module is configured to support communication between the communication device and other devices. The communication device may also include a storage module for coupling with the transceiver module and the processing module, in which the storage module stores a computer program and data necessary for the communication device.

In an implementation, the communication device includes: a transceiver module, configured to receive TNL configuration information, in which the first node includes an MT, a first DU, and a second DU, the TNL configuration information is configured to indicate the second DU to set up a connection with a third node via a transport path between the MT's donor node and the MT, and the third node is different from a donor node connected to the first DU.

According to a fifth aspect, the embodiments of the present disclosure provide another communication device. The communication device has some or all of the functions of the second node in the method in the second aspect above, for example, the communication device may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, a structure of the communication device may include a transceiver module and a processing module, in which the processing module is configured to support the communication device to perform corresponding functions in above method, and the transceiver module is configured to support communication between the communication device and other devices. The communication device may also include a storage module for coupling with the transceiver module and the processing module, in which the storage module stores a computer program and data necessary for the communication device.

In an implementation, the communication device includes: a transceiver module, configured to send TNL configuration information to a first node, in which the first node includes an MT, a first DU, and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

According to a sixth aspect, the embodiments of the present disclosure provide another communication device. The communication device has some or all of the functions of the third node in the method in the third aspect above, for example, the communication device may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, a structure of the communication device may include a transceiver module and a processing module, in which the processing module is configured to support the communication device to perform corresponding functions in above method, and the transceiver module is configured to support communication between the communication device and other devices. The communication device may also include a storage module for coupling with the transceiver module and the processing module, in which the storage module stores a computer program and data necessary for the communication device.

In an implementation, the communication device includes: a transceiver module, configured to send first indication information to a second node, in which the first indication information is configured to indicate the second node to send TNL configuration information to a first node, the first node includes an MT, a first DU, and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

According to a seventh aspect, the embodiments of the present disclosure provide a communication device. The communication device includes a processor. When a computer program in a memory is called by the processor, the method in the first aspect above is implemented.

According to an eighth aspect, the embodiments of the present disclosure provide a communication device. The communication device includes a processor. When a computer program in a memory is called by the processor, the method in the second aspect above is implemented.

According to a ninth aspect, the embodiments of the present disclosure provide a communication device. The communication device includes a processor. When a computer program in a memory is called by the processor, the method in the third aspect above is implemented.

According to a tenth aspect, the embodiments of the present disclosure provide a communication device. The communication device includes a processor and a memory for storing a computer program. When the computer program stored in the memory is executed by the processor, the communication device is caused to implement the method in the first aspect above.

According to an eleventh aspect, the embodiments of the present disclosure provide a communication device. The communication device includes a processor and a memory for storing a computer program. When the computer program stored in the memory is executed by the processor, the communication device is caused to implement the method in the second aspect above.

According to a twelfth aspect, the embodiments of the present disclosure provide a communication device. The communication device includes a processor and a memory for storing a computer program. When the computer program stored in the memory is executed by the processor, the communication device is caused to implement the method in the third aspect above.

According to a thirteenth aspect, the embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method in the first aspect above.

According to a fourteenth aspect, the embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method in the second aspect above.

According to a fifteenth aspect, the embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method in the third aspect above.

According to a sixteenth aspect, the embodiments of the present disclosure provide a system for setting up a connection. The system includes the communication device in the fourth aspect, the communication device in the fifth aspect, and the communication device in the sixth aspect, or the system includes the communication device in the fifth aspect and the communication device in the sixth aspect, or the system includes the communication device in the seventh aspect, the communication device in the eighth aspect, and the communication device in the ninth aspect, or the system includes the communication device in the tenth aspect, the communication device in the eleventh aspect, and the communication device in the twelfth aspect, or the system includes the communication device in the thirteenth aspect, the communication device in the fourteenth aspect, and the communication device in the fifteenth aspect.

According to a seventeenth aspect, the embodiments of the present disclosure provide a computer-readable storage medium for storing instructions used by the first node above. When the instructions are executed, the first node is caused to implement the method in the first aspect above.

According to an eighteenth aspect, the embodiments of the present disclosure provide a readable storage medium for storing instructions used by second node above. When the instructions are executed, the second node is caused to implement the method in the second aspect above.

According to a nineteenth aspect, the embodiments of the present disclosure provide a readable storage medium for storing instructions used by third node above. When the instructions are executed, the third node is caused to implement the method in the third aspect above.

According to a twentieth aspect, the embodiments of the present disclosure provide a computer program product including a computer program. When the computer program is running on a computer, the computer is caused to implement the method in the first aspect above.

According to a twenty-first aspect, the embodiments of the present disclosure provide a computer program product including a computer program. When the computer program is running on a computer, the computer is caused to implement the method in the second aspect above.

According to a twenty-second aspect, the embodiments of the present disclosure provide a computer program product including a computer program. When the computer program is running on a computer, the computer is caused to implement the method in the third aspect above.

According to a twenty-third aspect, the embodiments of the present disclosure provide a computer program. When the computer program is running on a computer, the computer is caused to implement the method in the first aspect above.

According to a twenty-fourth aspect, the embodiments of the present disclosure provide a computer program. When the computer program is running on a computer, the computer is caused to implement the method in the second aspect above.

According to a twenty-fifth aspect, the embodiments of the present disclosure provide a computer program. When the computer program is running on a computer, the computer is caused to implement the method in the third aspect above.

### BRIEF DESCRIPTION OF THE DRAWINGS

In order to more clearly illustrate the technical solution in embodiments of the disclosure or the background, the accompanying drawings to be used in embodiments of the disclosure or the background will be described below.
FIG. 1 is a schematic diagram of an architecture of a communication system according to the embodiments of the present disclosure.
FIG. 2 is a block diagram of a structure of an integrated access and backhaul (IAB) node according to the embodiments of the present disclosure.
FIG. 3 is a schematic diagram of a backhaul link and an access link according to the embodiments of the present disclosure.
FIG. 4 is a schematic diagram of an architecture of an exemplary communication system applicable to the embodiments of the present disclosure.
FIG. 5 is a schematic diagram of an architecture of an exemplary communication system applicable to the embodiments of the present disclosure.
FIG. 6 is a schematic diagram of an architecture of an exemplary communication system applicable to the embodiments of the present disclosure.
FIG. 7 is a schematic diagram of an IAB architecture according to the embodiments of the present disclosure.
FIG. 8 is a schematic diagram of another IAB architecture according to the embodiments of the present disclosure.
FIG. 9 is a schematic diagram of an IAB-mobile termination (IAB-MT) migration according to the embodiments of the present disclosure.
FIG. 10 is a schematic diagram of an IAB-distributed unit (IAB-DU) migration according to the embodiments of the present disclosure.
FIG. 11 is a flowchart of a method for a partial migration according to the embodiments of the present disclosure.
FIG. 12 is a flowchart of a method for setting up a connection according to the embodiments of the present disclosure.
FIG. 13 is a flowchart of another method for setting up a connection according to the embodiments of the present disclosure.
FIG. 13a is a schematic diagram of separated IAB-DU migration and IAB-MT migration according to the embodiments of the present disclosure.
FIG. 14 is a flowchart of another method for setting up a connection according to the embodiments of the present disclosure.
FIG. 15 is a flowchart of another method for setting up a connection according to the embodiments of the present disclosure.
FIG. 16 is a flowchart of another method for setting up a connection according to the embodiments of the present disclosure.
FIG. 17 is a flowchart of another method for setting up a connection according to the embodiments of the present disclosure.
FIG. 18 is a flowchart of another method for setting up a connection according to the embodiments of the present disclosure.
FIG. 19 is a flowchart of another method for setting up a connection according to the embodiments of the present disclosure.
FIG. 20 is a flowchart of another method for setting up a connection according to the embodiments of the present disclosure.
FIG. 21 is a flowchart of another method for setting up a connection according to the embodiments of the present disclosure.
FIG. 22 is a flowchart of another method for setting up a connection according to the embodiments of the present disclosure.
FIG. 23 is a block diagram of a communication device according to the embodiments of the present disclosure.
FIG. 24 is a block diagram of another communication device according to the embodiments of the present disclosure.
FIG. 25 is a block diagram of a chip according to the embodiments of the present disclosure.

### DETAILED DESCRIPTION

The embodiments of the present disclosure are described in detail below. Examples of the embodiments are shown in the accompanying drawings, in which the same or similar labels throughout the present embodiment represent the same or similar elements or elements having the same or similar functions. The embodiments below with reference to the accompanying drawings are exemplary and are intended to explain the present disclosure, but should not be construed as a limitation to the present disclosure. In the description of the disclosure, unless otherwise represented, "/" means or, for example, "A/B" may represent A or B. "And/or" is an association relationship that describes associated objects, indicating three kinds of relationships. For example, A and/or B may represent: A alone, both A and B at the same time, and B alone.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "while", or "in response to determining... ".

The embodiments of the present disclosure are described in detail below. Examples of the embodiments are shown in the accompanying drawings, in which the same or similar labels throughout the present embodiment represent the same or similar elements or elements having the same or similar functions. The embodiments below with reference to the accompanying drawings are exemplary and are intended to explain the present disclosure, but should not be construed as a limitation to the present disclosure.

Before introducing the embodiments of the present disclosure, some terms used in the embodiments of the present disclosure are briefly explained to facilitate understanding by those skilled in the art.

1) User equipment (UE) is a device that provides a voice and/or data connectivity to a user. The UE in the present disclosure may be a terminal, or a hardware component in the terminal that may implement functions of the terminal.

In the embodiments of this disclosure, the UE may be called a terminal, a mobile station (MS), a mobile terminal (MT), etc., for example, a handheld device with a radio connection function, or a processing device connected to a radio modem. The terminal may communicate with a core network via a radio access network (RAN) and exchange a voice and/or data with the RAN. For example, the terminal may be a personal communication service (PCS) phone, a cordless phone, a session initiation protocol (SIP) phone, a wireless local loop (WLL) station, a personal digital assistant (PDA), a barcode, a radio frequency identification (RFID), a sensor, a satellite navigation system, such as a global positioning system (GPS), a Beidou positioning system, a laser scanner, and other information sensing devices.

The UE may also be a wearable device. The wearable device may also be referred to as a wearable smart device. It is a general term that applies a wearable technology to intelligently design a daily wear and develop a wearable device, such as glasses, gloves, watches, clothing, and shoes. The wearable device is a portable device that is directly worn on a body or integrated into the user's clothes or accessories. The wearable device is not just a hardware device, but also achieves a powerful function via software support, data interaction, and cloud interaction. Broadly speaking, the wearable smart device includes those devices with a comprehensive function, a large size, and an ability to perform a complete or partial function without relying on a smartphone, such as a smart watch or a pair of smart glasses, and those devices which focus on a specific type of an application function and need to be used in combination with a smartphone or other devices, such as various smart bands for monitoring a physical sign, various smart helmets, and various smart jewelries. The terminal may be a virtual reality (VR) device, an augmented reality (AR) device, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, a terminal in a future evolved public land mobile communication network (PLMN), a vehicle device in a vehicle-to-everything (V2X) network, and customer premises equipment (CPE), etc.

A function of the UE may be realized via a hardware component in the UE. The hardware component may be a processor and/or a programmable chip inside the UE. Optionally, the chip may be implemented via an application-specific integrated circuit (ASIC) or a programmable logic device (PLD). The PLD may be any one or a combination of the following: a complex programmable logic device (CPLD), a field-programmable gate array (FPGA), a generic array logic (GAL), or a system on a chip (SOC).

As described above, various terminals, if located in a vehicle (for example, placed or installed in the vehicle), may be regarded as on-board terminals. The on-board terminal is also called an on-board unit (OBU).

2) Donor node (IAB-donor), also known as a donor base station, refers to a node via which the core network may be accessed, and is a device in a communication system that accesses the UE to a wireless network. The IAB-donor is generally connected to the core network via a wired link (such as an optical fiber cable). The IAB-donor is responsible for receiving data from the core network and forwarding it to a radio backhaul device, or receiving data from the radio backhaul device and forwarding it to the core network. Generally, the IAB-donor may be connected to the network in a wired manner.

As an example, the IAB-donor may include a radio network controller (RNC), a node B (NB), a base station controller (BSC), a base transceiver station (BTS), a home base station (such as a home evolved Node B or a home Node B (HNB)), a base band unit (BBU), etc. It may also include an evolutional Node B (that is, Node B or eNB or e-NodeB) in an LTE-Advanced (LTE-A), or may include a next generation node B (gNB) in a fifth generation (5G) mobile communication technology new radio (NR) system. As another example, the IAB-donor may include a centralized unit (CU) (referred to as donor-CU or gNB-CU in the present disclosure) and a distributed unit (DU) (referred to as donor-DU or gNB-DU in the present disclosure). gNB-CU and gNB-DU are connected via an F1 interface, and the F1 interface may further include a control plane interface (F1-C) and a user plane interface (F1-U). CU is connected to the core network via a next-generation (NG) interface. gNB-CU or donor-CU may also exist in a separated form of a user plane (UP) (referred to as CU-UP in the present disclosure) and a control plane (CP) (referred to as CU-CP in the present disclosure), that is, gNB-CU or donor-CU is composed of the CU-CP and the CU-UP. One gNB-CU may include one gNB-CU-CP and at least one gNB-CU-UP, or, one donor-CU may include one donor-CU-CP and at least one donor-CU-UP.

A function of the IAB-donor may be implemented by a hardware component in the IAB-donor, for example, a processor and/or a programmable chip in the IAB-donor. For example, the chip may be implemented by an ASIC or a PLD. The PLD may be one or a combination of a CPLD, an FPGA, a GAL, and an SoC.

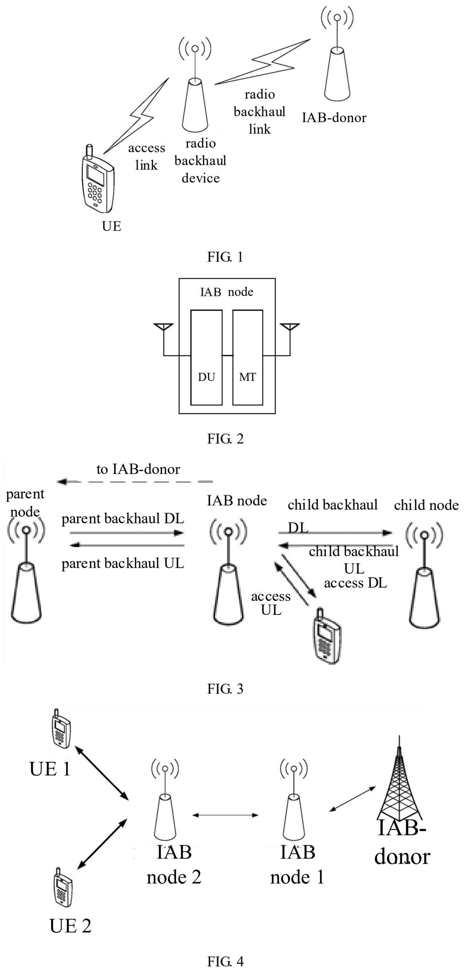

FIG. 1 shows an IAB system. An IAB-node provides a radio access and a radio backhaul of an access service for the UE. The IAB-donor provides a radio backhaul function for the IAB-node and provides an interface between the UE and the core network. The IAB-node is connected to the IAB-donor via a radio backhaul link, thereby enabling a device on a UE side served by the IAB-node to be connected to the core network.

It should be noted that in a network architecture diagram shown in FIG. 1, although the UE, the radio backhaul device and the IAB-donor are shown, the network architecture may include but is not limited to the UE, the radio backhaul device and the IAB-donor. For example, it may also include the core network or a device used to carry a virtualized network function, etc. In addition, in the system shown in FIG. 1, although one UE, one radio backhaul device and one IAB-donor are shown, the network architecture does not limit a number of the UE, the radio backhaul device and the IAB-donor. For example, it may also include a plurality of UE, a plurality of radio backhauls devices and a plurality of IAB-donors, etc. The radio backhaul device may be the IAB-node.

FIG. 2 shows a block diagram of a structure of an IAB-node. The IAB-node in an NR may include two parts: an MT and a DU. MT may also be understood as a component similar to a terminal in the IAB-node. DU is relative to a CU function of the network device. Therefore, it may also be considered that the IAB-node includes an MT function and a DU function. For convenience of description, in a following text, the MT function is referred to as MT or IAB-MT, and the DU function is referred to as DU or IAB-DU. Since MT has a function similar to a function of a common terminal, it may be understood that MT is used for a communication between the IAB-node and an upper node (parent node). DU is used for a communication between the IAB-node and a lower node (child node). It may be understood that the parent node may be a base station or other IAB-nodes, and the child node may be a terminal or other IAB-nodes. A link via which MT communicates with the parent node is called a parent backhaul link, a link via which DU communicates with the child IAB-node is called a child backhaul link, and a link via which DU communicates with a subordinate terminal is called an access link. The IAB-node may be connected to the IAB-donor via a plurality of levels of parent nodes. In some embodiments, the child backhaul link is also referred to as the access link, in which the parent backhaul link includes a parent backhaul uplink (UL) and a parent backhaul downlink (DL), the child backhaul link includes a child backhaul UL and a child backhaul DL, and the access link includes an access UL and an access DL, as shown in FIG. 3.

The method for setting up a connection in the embodiments of the present disclosure may be applied to various communication systems including the radio backhaul device, such as an NR system, an LTE system, an LTE-A system, a worldwide interoperability for microwave access (WiMAX), or a wireless local area network (WLAN), etc.

Exemplarily, the communication method in the embodiments of the present disclosure may be applied to the network architecture in FIG. 1. In the network architecture shown in FIG. 1, the UE is connected to the radio backhaul device in a radio manner, and the radio backhaul device is connected to the IAB-donor in a radio manner. The UE may communicate with the radio backhaul device and the radio backhaul device may communicate with the IAB-donor via a licensed spectrum or an unlicensed spectrum, or via both the licensed spectrum and the unlicensed spectrum. For example, the licensed spectrum may be a spectrum below 6GHz, which is not limited here. It may be understood that FIG. 1 is only an exemplary description and does not specifically limit a number of the UE and the radio backhaul device in the radio communication system. In the network architecture shown in FIG. 1, the radio backhaul device regards a node providing a backhaul service for it as a sole parent node, for example, the radio backhaul device regards the IAB-donor as the parent node. After the radio backhaul device receives a radio bearer for carrying UL information from the UE and transmits the radio bearer to the IAB-donor, the IAB-donor sends the UL information in the radio bearer to a mobile gateway device (for example, a user port function (UPF) in the 5G network). The mobile gateway device sends a radio bearer for carrying DL information to the IAB-donor, and then the radio bearer is sent to the UE via the radio backhaul device.

It may be understood that the IAB-node in the embodiments of the present disclosure is merely for a purpose of description and does not mean that the scheme of the embodiments of the present disclosure is only applicable to an NR scenario. In the embodiments of the present disclosure, the IAB-node may generally refer to any node or device with the radio backhaul function. It may be understood that a use of the IAB-node and a use of a relay node in the present disclosure have the same meaning.

As an example, please refer to FIG. 4, which is an example of a communication system including a plurality of UEs and a plurality of IAB-nodes. FIG. 4 takes two UEs and two IAB-nodes as an example, in which these two UEs are UE 1 and UE 2, and these two IAB-nodes are IAB-node 1 and IAB-node 2. UE 1 and UE 2 may access IAB-node 2, IAB-node 2 is connected to IAB-node 1 in a radio manner, and IAB-node 1 is connected to the IAB-donor in a radio manner. It may be understood that IAB-node 1 is a parent node of IAB-node 2, and the IAB-donor is a parent node of IAB-node 1. IAB-node 2 provides a radio access service for UE 1 and UE 2 via access links (thick lines as shown in FIG. 4), and a radio bearer sent by UE 1 and a radio bearer sent by UE 2 are transmitted to the IAB-donor via IAB-node 2 and IAB-node 1 respectively, and then the IAB-donor sends the UL information in the radio bearer to the mobile gateway device. On the contrary, the mobile gateway device may send the radio bearer for carrying the DL information to the IAB-donor, and then send the radio bearer to UE 1 and UE 2 via IAB-node 1 and IAB-node 2 respectively. As may be seen from FIG. 4, the radio bearer sent by any UE is transmitted via two IAB-nodes successively to the IAB-donor, which may be understood as a multi-hop radio backhaul scenario, ensuring a coverage of the network.

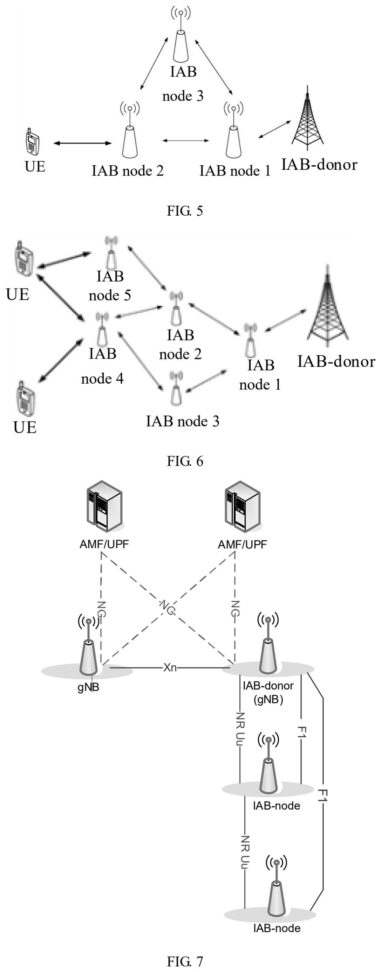

As another example, please refer to FIG. 5, which is an example of a communication system including one UE and a plurality of IAB-nodes. FIG. 5 takes one user device and three IAB-nodes as an example, in which these three IAB-nodes are IAB-node 1, IAB-node 2, and IAB-node 3. Compared with FIG. 4, the UE in FIG. 5 may access the IAB-donor via two paths. One path is to pass through the UE, IAB-node 2, IAB-node 1, and the IAB-donor successively; the other path is to pass through the UE, IAB-node 2, IAB-node 3, IAB-node 1, and the IAB-donor successively. The UE accesses the IAB-donor via a plurality of paths, which may be understood as a multi-connection radio backhaul scenario, ensuring a reliability of service transmission. Then, compared with FIG. 4, the architecture shown in FIG. 5 may be understood as a multi-hop plus multi-connection networking scenario.

As another example, please refer to FIG. 6, which is an example of a communication system including a plurality of UEs and a plurality of IAB-nodes. FIG. 6 takes two UEs and five IAB-nodes as an example, in which these two UEs are UE 1 and UE 2, and these five IAB-nodes are IAB-node 1 to IAB-node 5. It may be understood that thick lines in FIG. 6 represent access links, and thin lines represent backhaul links. UE 1 may be connected to the IAB-donor via IAB-node 5, IAB-node 2, and IAB-node 1; or may also be connected to the IAB-donor via IAB-node 4, IAB-node 2, and IAB-node 1; or may also be connected to the IAB-donor via IAB-node 4, IAB-node 3, and IAB-node 1. UE 2 may be connected to the IAB-donor via IAB-node 4, IAB-node 3, and IAB-node 1; or may also be connected to the IAB-donor via IAB-node 4, IAB-node 2, and IAB-node 1.

It should be noted that network structures shown in FIG. 4 to FIG. 6 are only examples and do not limit application scenarios of the present disclosure. For example, the present disclosure may also be applied to a scenario where the UE communicates with the IAB-donor via one IAB-node, which is not elaborated one by one.

It may be understood that an F1 interface needs to be set up between DU of the IAB-node and CU of the IAB-donor, and a configuration of routing and bearer mapping needs to be completed, so as to enable data transmission between the IAB-node and a target IAB-donor based on the configuration. Of course, the F1 interface may also be called an F1* interface. The embodiments of the present disclosure does not limit a name of this interface. This interface being the F1 interface is taken as an example in this disclosure.

The F1 interface may support a user plane protocol (F1-U/F1*-U) and a control plane protocol (F1-C/F1*-C). The user plane protocol includes one or more of following protocol layers: a general packet radio service (GPRS) tunneling protocol user plane (GTP-U) protocol layer, a user data gram protocol (UDP) protocol layer, an Internet protocol (IP) protocol layer, etc. The control plane protocol includes one or more of following protocol layers: an F1 application protocol (F1AP), a stream control transport protocol (SCTP), an IP protocol layer, etc. Via a control plane of the F1/F1* interface, the IAB-node and the IAB-donor may perform interface management, manage IAB-DU, and perform a configuration related to a context of the terminal, etc. Via a user plane of the F1/F1* interface, the IAB-node and the IAB-donor may transmit data of the user plane, feed back a DL transmission state, and so on.

In addition, for convenience of understanding the embodiments of the present disclosure, explanations are given below.

First, in the embodiments of the present disclosure, "be configured to indicate" may include a direct indication and an indirect indication. Some information being configured to indicate A includes that the information directly indicates A or indirectly indicates A, but does not mean that the information necessarily carries A.

Information indicated by the information is called information to be indicated. In a specific implementation process, there are many ways to indicate the information to be indicated, which may include but is not limited to, directly indicate the information to be indicated, such as the information to be indicated itself or an index of the information to be indicated; or indirectly indicate the information to be indicated by indicating other information, in which the other information has an association relationship with the information to be indicated; or merely indicate a part of the information to be indicated, and other parts of the information to be indicated are known or agreed upon in advance; or indicate a specific piece of information by using a predetermined order of various information (such as stipulated in a protocol), thereby reducing an indication overhead to a certain extent.

The information to be indicated may be sent as a whole or divided into a plurality of pieces of sub-information and sent separately. A sending period and/or sending timing of these sub-information may be the same or different. The specific sending method is not limited in the present disclosure. The sending period and/or sending timing of these sub-information may be predefined, for example according to the protocol.

Second, in the present disclosure, terms such as first, second, and various numbers (such as "IAB-donor 1", "IAB-donor 2") are only for convenience of description, for example, to distinguish different information, and do not limit a scope of the embodiments of the present disclosure.

Third, a plurality of implementations are listed in embodiments of the present disclosure to clearly illustrate the technical solution of the embodiments of the present disclosure. Of course, those skilled in the art may understand that the plurality of implementations in embodiments of the present disclosure may be executed individually or in combination with the method of other embodiments in the present disclosure, or individually or in combination with some methods in other related arts, which is not limited in the embodiments of the present disclosure.

In an NR system, the IAB supports a millimeter wave base station to perform a radio access and backhaul. When deploying a dense network, a need for a new fiber deployment is effectively reduced, which makes the wireless relay possible in a next generation-radio access network (NG-RAN). A relay node is called an IAB-node, and it supports to perform the radio access and backhaul via the NR. A termination node of an NR backhaul on a network side is called an IAB-donor, which is a gNB (a base station in the 5G network) with an additional IAB function. The backhaul may be carried out via single-hop or multi-hop.

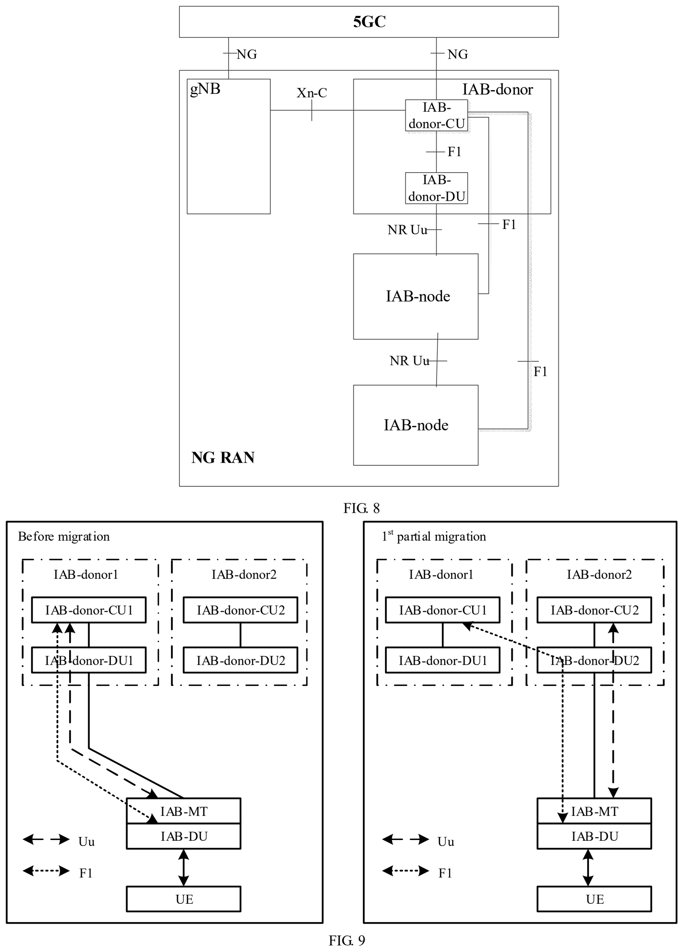

As shown in FIGs. 7 and 8, the NG-RAN is wirelessly connected to a gNB (referred to as IAB-donor) that may serve the IAB-node via the IAB-node to support the IAB. The IAB-donor includes one IAB-donor-CU (central unit) and one or more IAB-donor-DUs (distributed units). When a gNB-CU-CP (central unit-control plane) and a gNB-CU-UP (central unit-user plane) are separated, the IAB-donor may include one IAB-donor-CU-CP, a plurality of IAB-donor-CU-UPs and a plurality of IAB-donor-DUs. The IAB-node connects to an upstream IAB-node or IAB-donor-DU via a terminal function subset of an NR Uu interface (referred to as IAB-MT function of the IAB-node). The IAB-node provides a radio backhaul to a downstream IAB-node and terminal via a network function of the NR Uu interface (referred to as IAB-DU function of the IAB-node). AMF in FIG. 7 is an abbreviation of access and mobility management function; and UDF in FIG. 7 is an abbreviation of user plane function.

An F1-C service between the IAB-node and the IAB-donor-CU is backhauled via the IAB-donor-DU and an optional intermediate hop IAB-node. An F1-U service between the IAB-node and the IAB-donor-CU is backhauled via the IAB-donor-DU and an optional intermediate hop IAB-node.

In an IAB project research in a version R18, a scenario with a mobile IAB is supported. A research on the mobile IAB focused on a scenario where an on-board mobile IAB-node provides 5G coverage or capability enhancement for an on-board terminal and/or a peripheral terminal.

The IAB-donor connected to the IAB-node may change as movement of the IAB-node. Thus, an IAB-node migration process needs to be performed. Currently, the migration may be divided into a partial migration (only an IAB-MT migration is performed, and IAB-DU remains on a source IAB-donor) and a full migration (IAB-MT and IAB-DU are migrated to a same donor).

The partial migration refers to that only IAB-MT on the IAB-node migrates (also known as hand over) to a new IAB-donor, while IAB-DU on the IAB-node still maintains a connection with an original IAB-donor (the connection needs to be performed via the IAB-donor-DU of the IAB-MT, that is, a corresponding transport path needs to be set up under the IAB-donor of the IAB-MT), and a UE context on IAB-DU is also saved on the original IAB-donor. The handover is shown in FIG. 9. Before the handover, as shown in a left box of FIG. 9, IAB-MT and IAB-DU are both connected to the IAB-donor 1 before the migration; and in a case that the first partial migration is performed, as shown in a right box of FIG. 9, after the first partial migration, if IAB-MT migrates to IAB-donor 2, then IAB-DU needs to set up a connection with IAB-donor 1 via the transport path under IAB-donor 2.

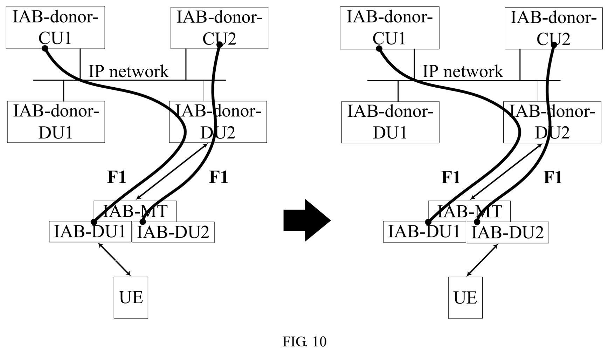

In the related art, a process of partial migration is illustrated in FIG. 10.

The F1 connection between IAB-DU1 and IAB-donor-CU1 (that is, F1-terminating IAB-donor) needs to be redirected to a target transport path (set up by IAB-donor-CU3) in step 15. Before this, IAB-donor-CU3 (that is, target IAB-donor) needs to send BH RLC configuration information to the IAB-node in steps 4 to 6, and set up the target transport path in step 14. For simplicity, only parts related to the process in the present disclosure are described below.

In step 4, the target IAB-donor-CU performs admission control and provides the new RRC configuration as part of the HANDOVER REQUEST ACKNOWLEDGE message. The RRC configuration includes a BAP address for the boundary node in the target IAB-donor-CU's topology, a default BH RLC channel and a default BAP routing ID configuration for UL F1-C/non-F1 traffic mapping on the target path. The RRC configuration may include the new TNL address(es) anchored at the target IAB-donor-DU for the migrating node.

In step 5, the source IAB-donor-CU sends a UE CONTEXT MODIFICATION REQUEST message to the source parent node IAB-DU, which includes the received RRCReconfiguration message from the target IAB-donor-CU.

In step 6, the source parent node IAB-DU forwards the received RRCReconfiguration message to the migrating IAB-MT.

In step 14, the target IAB-donor-CU configures BH RLC channels and BAP-sublayer routing entries on the target path between the migrating IAB-node and target IAB-donor-DU, as well as DL mappings on the target IAB-donor-DU for the migrating IAB-node's target path. These configurations support the transport of F1-C traffic on the target path.)

In step 15, The F1-C connection between the migrating IAB-node and the source IAB-donor-CU are switched to the target path using the new TNL address information of the migrating IAB-node. The migrating IAB-node may report the new TNL address information it wants to use for F1-U traffic to the source IAB-donor-CU, via the gNB-DU CONFIGURATION UPDATE message.

In some embodiments, migration of a mobile IAB-DU (mIAB-DU) may be performed independently of an mIAB-MT, in which IAB may also refer to mobile IAB (mIAB).

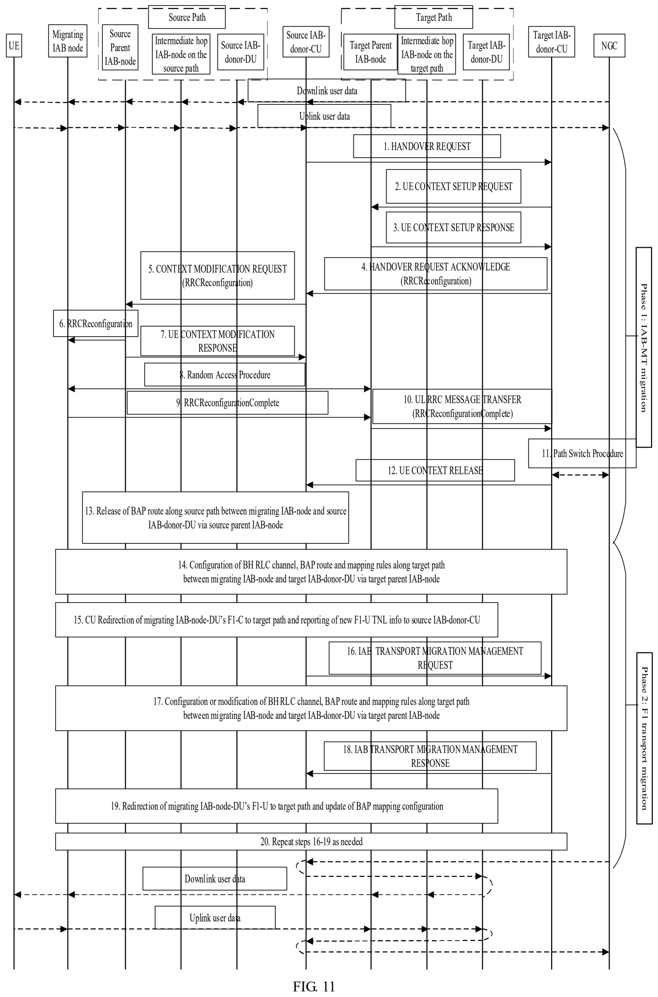

Specifically, IAB-DU may perform a migration separately. In a DU migration, all UEs served by IAB-DU should migrate from one IAB-donor to another IAB-donor. However, IAB-DU should first disconnect the F1 connection from the source IAB-donor-CU before setting up a new F1 connection with the target IAB-donor-CU. This causes an interruption in UE connection and requires to re-set up a connection by UE, which leads to service disruption. To avoid such disruption, the UE migration may be achieved by creating a new logical DU on the IAB-node (the new logical DU is connected to a target IAB-donor-CU of the IAB-DU). From a perspective of UE, the handover is to switch from a logical cell of IAB-DU1 to a logical cell of IAB-DU2 without connection interruption. This approach reuses a legacy handover procedure and reduces a time of service interruption, as shown in FIG. 11.

In an IAB network architecture, the first node may provide a radio access service to UE. UE may be connected to the IAB-donor via a radio backhaul link of the first node. The first node includes two functional units: an MT, also referred to as MT of the first node, and a DU, also referred to as DU of the first node.

As the first node moves, the first node may migrate (or hand over) from a source IAB-donor (hereafter referred to as "IAB-donor 1") to a new IAB-donor (hereafter referred to as "IAB-donor 2"). MT may migrate independently, or together with DU. When MT migrates independently, MT connects to the IAB-donor 2 and DU remains connected to the IAB-donor 1. However, DU should connect to the IAB-donor 1 via a transport path between the MT's IAB-donor 2 and the MT. When both MT and DU migrate, both MT and DU connect to the IAB-donor 2.

In the embodiments of the present disclosure, to avoid service interruption in a case of migration of DU of the first node, a new DU (hereafter referred to as "DU2") may be set up on the first node. Through a connection between DU2 and the target IAB-donor, a handover of a connection of UE served by the above DU (hereinafter referred to as "DU1") from the source IAB-donor to the target IAB-donor is completed. DU1 may set up a connection with the IAB-donor 1 which is connected to DU1, via a transport path between the MT's IAB-donor 2 and the MT, or DU1 may directly connect to the IAB-donor 2.

However, it does not support that DU2 sets up a connection with the target IAB-donor that is different from the IAB-donor 1 connected to DU1, via a transport path between the MT's IAB-donor 2 and the MT. This is a major problem to be solved.

Based on this, the embodiments of the present disclosure provide a method for setting up a connection. The first node receives the TNL configuration information, in which the first node includes the MT, the first DU, and the second DU, the TNL configuration information is configured to indicate the second DU to set up the connection with the third node via the transport path between the MT's donor node and the MT, and the third node is different from the donor node connected to the first DU. Therefore, the second DU of the first node is supported to set up the connection with the third node via the transport path between the MT's donor node and the MT, and the third node is different from the donor node connected to the first DU.

In the present disclosure, "a transport path under the donor node" may also be understood as "a transport path in the donor node's topology" or "a child node of a transport path passing the donor node's topology".

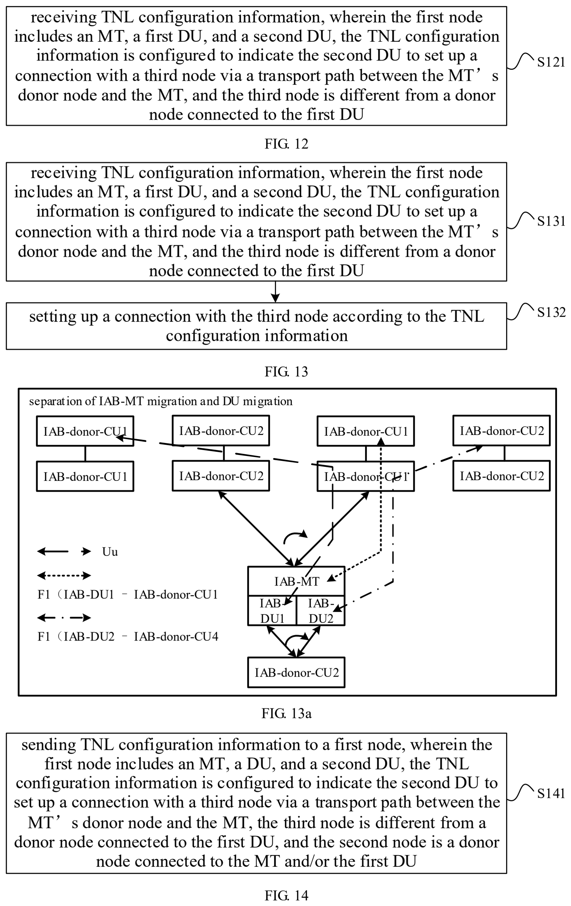

Refer to FIG. 12, which is a flowchart of a method for setting up a connection according to the embodiments of the present disclosure. It needs to be noted that the method for setting up a connection may be performed by a first node, in which the first node may be an IAB-node. As shown in FIG. 12, the method may include but is not limited to S121.

At S121, TNL configuration information is received, in which the first node includes an MT, a first DU, and a second DU, the TNL configuration information is configured to indicate the second DU to set up a connection with a third node via a transport path between the MT's donor node and the MT, and the third node is different from a donor node connected to the first DU.

In the embodiments of the present disclosure, the first node receives the TNL configuration information, the TNL configuration information is configured to indicate the second DU to set up the connection with the third node via the transport path between the MT's donor node and the MT, and the third node is different from the donor node connected to the first DU.

Based on this, the second DU of the first node may set up the connection with the third node via the transport path between the MT's donor node and the MT based on the TNL configuration information, in which the third node is different from the donor node connected to the first DU. Therefore, the second DU of the first node is supported to set up the connection with the third node via the transport path between the MT's donor node and the MT, and the third node is different from the donor node connected to the first DU, and MT migration and DU migration may be separated, which supports to set up an F1 connection in various scenarios.

In an embodiment of the present disclosure, the first node may be an IAB-node, and the IAB-node may also be a mobile IAB-node, namely an mIAB-node.

In an embodiment of the present disclosure, the first node may include one or more logical child nodes, including MT (or referred to as IAB-MT), DU (or referred to as IAB-DU).

The first node may include one or more DUs, for example, the first DU and the second DU.

In an embodiment of the present disclosure, "a transport path under the donor node" may also be understood as "a transport path in the donor node's topology" or "a child node of a transport path passing the donor node's topology".

The second DU setting up a connection with the third node via the transport path between the MT's donor node and the MT may be that the second DU sets up a connection with the third node via the transport path in the topology of the donor node connected to the MT, or may also be that the transport path used for the second DU to set up a connection with the third node passes a child node of the donor node connected to the MT.

In an embodiment of the present disclosure, the second DU sets up the connection with the third node via the transport path between the MT's donor node and the MT, in which the third node is different from the donor node connected to the MT.

In some embodiments, the first node receives the TNL configuration information sent by the second node, in which the second node is a donor node connected to the MT and/or the first DU.

In an embodiment of the present disclosure, the first node may receive the TNL configuration information sent by the second node, in which the second node is the donor node connected to the MT and/or the first DU.

In a possible implementation, the first node receives the TNL configuration information sent by the donor node connected to the MT.

In a possible implementation, the first node receives the TNL configuration information sent by the donor node connected to the first DU.

In a possible implementation, the first node receives the TNL configuration information sent by the donor node connected to the MT and the first DU.

It may be understood that the MT and the first DU may be connected to a same donor node, or the MT and the first DU may be respectively connected to different donor nodes.

In a case where the MT and the first DU are connected to the same donor node, the second node may be the donor node connected to the MT and the first DU. In this case, the first node may receive the TNL configuration information sent by the second node connected to both the MT and the first DU.

In a case where the MT and the first DU are respectively connected to different donor nodes, the second node may be the donor node connected to the MT. For example, the second node may be a source donor node of the MT of the first node, or may be a target donor node of the MT of the first node.

Alternatively, the second node may also be the donor node connected to the first DU. In this case, the first node may receive the TNL configuration information sent by the second node connected to the MT, or the first node may receive the TNL configuration information sent by the second node connected to the first DU.

In some embodiments, the first node receives the TNL configuration information sent by the second node, including: receiving a radio resource control (RRC) reconfiguration message sent by the second node, in which the RRC reconfiguration message includes the TNL configuration information; or receiving an F1AP message sent by the second node, in which the F1AP message includes the TNL configuration information.

In an embodiment of the present disclosure, the first node may receive the RRC reconfiguration message sent by the second node, in which the RRC reconfiguration message includes the TNL configuration information.

In an embodiment of the present disclosure, the first node may receive the F1AP message sent by the second node, in which the F1AP message includes the TNL configuration information.

In some embodiments, the first node receives the RRC reconfiguration message sent by the second node, including: receiving the RRC reconfiguration message sent by the second node in a process that the MT hands over a connection to the second node; or receiving the RRC reconfiguration message sent by the second node after the MT hands over a connection to the second node.

In an embodiment of the present disclosure, the first node may receive the RRC reconfiguration message sent in the process that the MT hands over the connection to the second node. That is, the second node may send the RRC reconfiguration message in the process that the MT hands over the connection to the second node, in which the RRC reconfiguration message may also include information related to a handover command, or the RRC reconfiguration message is included in a handover request acknowledge message sent by the target donor node connected to the MT (i.e., the second node) to the source donor node connected to the MT. For example, the first node may receive the RRC reconfiguration message sent by the target donor node (for example, target IAB-donor-CU) to which the MT is to be handed over. Alternatively, the first node may receive the RRC reconfiguration message sent by the source donor node (for example, IAB-donor-CU) to which the MT is currently connected.

In an embodiment of the present disclosure, the first node may also receive the RRC reconfiguration message sent by the second node after the MT hands over the connection to the second node. For example, the first node may receive the RRC reconfiguration message sent by the donor node (for example, target IAB-donor-CU) to which the MT has already handed over.

In some embodiments, the TNL configuration information includes at least one of:
backhaul adaptation protocol (BAP) address information;
BH RLC channel information;
BAP routing identifier configuration information;
TNL address information; or
usage indication information.

In some embodiments, the TNL configuration information includes at least one of:
BAP address information, in which the BAP address information is configured to indicate a BAP address of the second DU in the topology of the donor node connected to the MT;
BH RLC channel information, in which the BH RLC channel information is configured to indicate a default BH RLC channel of the second DU in the topology of the donor node connected to the MT;
BAP routing identifier configuration information, in which the BAP routing identifier configuration information is configured to indicate a default BAP routing identifier configuration of the second DU in the topology of the donor node connected to the MT;
TNL address information, in which the TNL address information is configured to indicate a TNL address of the second DU in the topology of the donor node connected to the MT; or
usage indication information, in which the usage indication information is configured to indicate that a TNL configuration is for the second DU.

In some embodiments, the BAP address information is configured to indicate the BAP address for a boundary node in the topology of the donor node connected to the MT.

In some embodiments, the BH RLC channel information is used to configure the UL default BH RLC channel of the second DU in the topology of the donor node connected to the MT.

In some embodiments, the BH RLC channel information is used to configure a default BH RLC channel of the second DU for UL F1-C/non-F1 traffic mapping on the target path in the topology of the donor node connected to the MT.

In some embodiments, the BAP routing identifier configuration information is used to configure an UL default BAP routing identifier of the second DU in the topology of the donor node connected to the MT.

In some embodiments, the BAP routing identifier configuration information is used to configure a default BAP routing identifier of the second DU for UL F1-C/non-F1 traffic mapping on the target path in the topology of the donor node connected to the MT.

In some embodiments, the TNL address information is used to configure the TNL address of the second DU in the topology of the donor node connected to the MT.

In an embodiment of the present disclosure, the TNL configuration information includes the BAP address information, in which the BAP address information is configured to indicate the BAP address of the second DU in the topology of the donor node connected to the MT.

In an embodiment of the present disclosure, the TNL configuration information includes the BH RLC channel information, in which the BH RLC channel information is configured to indicate the default BH RLC channel of the second DU in the topology of the donor node connected to the MT.

In an embodiment of the present disclosure, the TNL configuration information includes the BAP routing identifier configuration information, in which the BAP routing identifier configuration information is configured to indicate the default BAP routing identifier configuration of the second DU in the topology of the donor node connected to the MT.

In an embodiment of the present disclosure, the TNL configuration information includes the TNL address information, in which the TNL address information is configured to indicate the TNL address of the second DU in the topology of the donor node connected to the MT.

In an embodiment of the present disclosure, the TNL configuration information includes the usage indication information, where the usage indication information is configured to indicate that the TNL configuration is for the second DU.

In an embodiment of the present disclosure, the usage indication information may be a second DU identifier, which is configured to indicate that the TNL configuration is for the second DU.

It needs to be noted that the above embodiments are not exhaustive and are only examples of some embodiments. The above embodiment may be implemented individually or in a combination with other embodiments. The above embodiments are shown as examples only and shall not be construed as a limitation of a protection scope of the embodiments of the present disclosure.

By implementing the embodiments of the present disclosure, the first node receives the TNL configuration information, in which the first node includes the MT, the first DU, and the second DU, the TNL configuration information is configured to indicate the second DU to set up the connection with the third node via the transport path between the MT's donor node and the MT, and the third node is different from the donor node connected to the first DU. Thus, the second DU of the first node may set up the connection with the third node via the transport path between the MT's donor node and the MT based on the TNL configuration information, in which the third node is different from the donor node connected to the first DU. Therefore, the second DU of the first node is supported to set up the connection with the third node via the transport path between the MT's donor node and the MT, and the third node is different from the IAB-donor connected to the first DU, and MT migration and DU migration may be separated, which supports to set up an F1 connection in various scenarios.

Please refer to FIG. 13, which is a flowchart of another method for setting up a connection according to the embodiments of the present disclosure. It needs to be noted that the method for setting up a connection in the embodiments of the present disclosure may be performed by a first node. The first node may be an IAB-node. As shown in FIG. 13, the method may include but is not limited to S131 and S132.

At S131, TNL configuration information is received, in which the first node includes a mobile MT, a first DU, and a second DU, the TNL configuration information is configured to indicate the second DU to set up a connection with a third node via a transport path between the MT's donor node and the MT, and the third node is different from a donor node connected to the first DU.

For relevant description of S131, please refer to relevant description in the above embodiments, which will not be repeated here.

At S132, a connection with the third node is set up according to the TNL configuration information.

In an embodiment of the present disclosure, after the first node receives the TNL configuration information, the first node may set up the connection with the third node according to the TNL configuration information.

For setting up the connection with the third node, the second node may send an setup request to set up a connection with the third node via the transport path between the MT's donor node and the MT.

In an embodiment of the present disclosure, the first node sets up the connection with the third node according to the TNL configuration information, which may refer to the method in the related art, and will not be repeated here.

Exemplarily, as shown in FIG. 13a, in a case that the IAB-DU migration and the IAB-MT migration is separated, since the IAB-DU migration and the IAB-MT migration may be performed separately, in an embodiment of the present disclosure, the first node receives the TNL configuration information and may set up the connection with the third node according to the TNL configuration information. The IAB-DU may be migrated to an IAB-donor-CU different from the IAB-donor-CU connected to the IAB-MT.

After a partial migration, it is possible that the IAB-MT and the IAB-DU need to be migrated to different donor-CUs at the same time, as shown in FIG. 13a.

After the IAB-node performs one or more IAB-MT migrations (also known as partial migration), a serving IAB-donor of the IAB-MT is IAB-donor-CU2, while a serving IAB-donor of the IAB-DU and a UE it provides service for is IAB-donor-CU1. As the IAB-node moves, the IAB-MT needs to hand over from IAB-donor-CU2 to IAB-donor-CU3, and the IAB-DU and the UE it provides service for need to migrate from IAB-donor-CU1 to IAB-donor-CU4. Before the UE migration, an effect to be achieved is as shown in FIG. 13a, an F1 connection path between IAB-DU1 and IAB-donor-CU1 needs to pass through IAB-donor-DU3, and an F1 connection path between IAB-DU2 and IAB-donor-CU4 needs to pass through IAB-donor-DU3.

By implementing the embodiments of the present disclosure, the first node receives the TNL configuration information, in which the first node includes the MT, the first DU, and the second DU, the TNL configuration information is configured to indicate the second DU to set up the connection with the third node via the transport path between the MT's donor node and the MT, and the third node is different from the donor node connected to the first DU, and the connection with the third node is set up according to the TNL configuration information. Thus, the second DU of the first node may set up the connection with the third node via the transport path between the MT's donor node and the MT based on the TNL configuration information, in which the third node is different from the donor node connected to the first DU. Therefore, the second DU of the first node is supported to set up the connection with the third node via the transport path between the MT's donor node and the MT, and the third node is different from the donor node connected to the first DU, and the MT migration and DU migration may be separated, which supports to set up an F1 connection in various scenarios.

Please refer to FIG. 14, which is a flowchart of another method for setting up a connection according to the embodiments of the present disclosure. It needs to be noted that the method for setting up a connection in the embodiments of the present disclosure may be performed by a second node. The second node may be a donor node connected to the MT and/or the first DU of the first node. Of course, the second node may also be a donor node that the MT of the first node will be connected to. As shown in FIG. 14, the method may include but is not limited to S141.

At S141, TNL configuration information is sent to a first node, in which the first node includes an MT, a first DU, and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

In an embodiment of the present disclosure, the second node may be the donor node of the MT of the first node, and the second node sends the TNL configuration information to the first node. For example, the second node may be the source donor node of the MT of the first node, or the target donor node of the MT of the first node.

In an embodiment of the present disclosure, the second node may be the donor node of the first DU of the first node, and the second node sends the TNL configuration information to the first node.

It may be understood that the donor node of the first DU of the first node may be a source donor node of the first node. In this case, the second node sends the TNL configuration information to the first node, and the TNL configuration information is used for the second DU to set up the connection with the third node via the transport path between the MT's donor node and the MT. The third node may be the donor node of the second DU of the first node, and may also be a target donor node of the first node.

The third node is different from the donor node connected to the first DU. DU migration of the first node is achieved, that is, handover from a source donor node to a target donor node.

In the embodiments of the present disclosure, the second node sends the TNL configuration information to the first node, in which the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the MT and/or the first DU. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU, and the MT migration and DU migration may be separated, which supports to set up an F1 connection in various scenarios.

In the embodiments of the present disclosure, "a transport path under the donor node" may also be understood as "a transport path in the donor node's topology" or "a child node of a transport path passing the donor node's topology".

The second DU setting up a connection with the third node via the transport path between the MT's donor node and the MT may be that the second DU sets up a connection with the third node via a transport path in IAB-donor's topology connected to the MT, or may also be that a transport path used for the second DU to set up a connection with the third node passes a child node of the donor node connected to the MT.

In some embodiments, the second node sends the TNL configuration information to the first node, including: sending an RRC reconfiguration message to the MT of the first node, in which the RRC reconfiguration message includes the TNL configuration information; or sending an F1AP message to the first DU of the first node, in which the F1AP message includes the TNL configuration information.

In an embodiment of the present disclosure, the second node may send the RRC reconfiguration message to the MT of the first node, where the RRC reconfiguration message includes the TNL configuration information.

In an embodiment of the present disclosure, the second node may send the F1AP message to the first DU of the first node; where the F1AP message includes the TNL configuration information.

In some embodiments, the second node sends the RRC reconfiguration message to the MT of the first node, including: sending the RRC reconfiguration message to the MT of the first node in a process that the MT of the first node hands over a connection to the second node; or sending the RRC reconfiguration message to the MT of the first node after the MT of the first node hands over a connection to the second node.

In an embodiment of the present disclosure, the second node may send the RRC reconfiguration message to the MT of the first node in the process that the MT of the first node hands over a connection to the second node, in which the RRC reconfiguration message may also include information related to a handover command, or the RRC reconfiguration message is included in a handover request acknowledge message sent by the target donor node connected to the MT (i.e., the second node) to the source -donor node connected to the MT.

In an embodiment of the present disclosure, the second node may send the RRC reconfiguration message to the MT of the first node after the MT of the first node is handed over to the second node.

In some embodiments, the TNL configuration information includes at least one of:
BAP address information;
BH RLC channel information;
BAP routing identifier configuration information;
TNL address information; or
usage indication information.

In some embodiments, the TNL configuration information includes at least one of:
BAP address information, in which the BAP address information is configured to indicate a BAP address of the second DU in the topology of the donor node connected to the MT;
BH RLC channel information, in which the BH RLC channel information is configured to indicate a default BH RLC channel of the second DU in the topology of the donor node connected to the MT;
BAP routing identifier configuration information, in which the BAP routing identifier configuration information is configured to indicate a default BAP routing identifier configuration of the second DU in the topology of the donor node connected to the MT;
TNL address information, in which the TNL address information is configured to indicate a TNL address of the second DU in the topology of the donor node connected to the MT; or
usage indication information, in which the usage indication information is configured to indicate that a TNL configuration is for the second DU.

In some embodiments, the BAP address information is configured to indicate the BAP address for a boundary node in the IAB-donor's topology connected to the MT.

In some embodiments, the BH RLC channel information is used to configure the UL default BH RLC channel of the second DU in the topology of the donor node connected to the MT.

In some embodiments, the BH RLC channel information is used to configure a default BH RLC channel for UL F1-C/non-F1 traffic mapping on the target path in the topology of the donor node connected to the MT.

In some embodiments, the BAP routing identifier configuration information is used to configure an UL default BAP routing identifier of the second DU in the topology of the donor node connected to the MT.

In some embodiments, the BAP routing identifier configuration information is used to configure a default BAP routing identifier of the second DU for UL F1-C/non-F1 traffic mapping on the target path in the topology of the donor node connected to the MT.

In some embodiments, the TNL address information is used to configure the TNL address of the second DU in the topology of the donor node connected to the MT.

In an embodiment of the present disclosure, the TNL configuration information includes the BAP address information, in which the BAP address information is configured to indicate the BAP address of the second DU in the topology of the donor node connected to the MT.

In an embodiment of the present disclosure, the TNL configuration information includes the BH RLC channel information, in which the BH RLC channel information is configured to indicate the default BH RLC channel of the second DU in the topology of the donor node connected to the MT.

In an embodiment of the present disclosure, the TNL configuration information includes the BAP routing identifier configuration information, in which the BAP routing identifier configuration information is configured to indicate the default BAP routing identifier configuration of the second DU in the topology of the donor node connected to the MT.

In an embodiment of the present disclosure, the TNL configuration information includes the TNL address information, in which the TNL address information is configured to indicate the TNL address of the second DU in the topology of the donor node connected to the MT.

In an embodiment of the present disclosure, the TNL configuration information includes the usage indication information, where the usage indication information is configured to indicate that the TNL configuration is for the second DU.

In an embodiment of the present disclosure, the usage indication information may be a second DU identifier, which is configured to indicate that the TNL configuration is for the second DU.

It needs to be noted that the above embodiments are not exhaustive and are only examples of some embodiments. The above embodiment may be implemented individually or in a combination with other embodiments. The above embodiments are shown as examples only and shall not be construed as a limitation of a protection scope of the embodiments of the present disclosure.

By implementing the embodiments of the present disclosure, the second node sends the TNL configuration information to the first node, in which the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the MT and/or the first DU. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

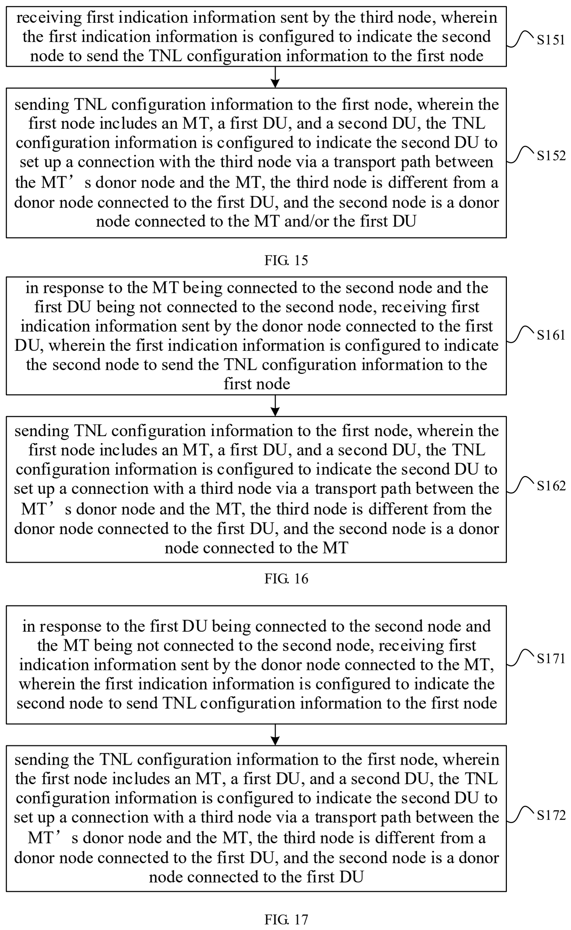

Please refer to FIG. 15, which is a flowchart of another method for setting up a connection according to the embodiments of the present disclosure. It needs to be noted that the method for setting up a connection in the embodiments of the present disclosure may be performed by a second node. The second node may be a donor node connected to the MT and/or the first DU of the first node. As shown in FIG. 15, the method may include but is not limited to S151 and S152.

At S151, first indication information sent by the third node is received, in which the first indication information is configured to indicate the second node to send the TNL configuration information to the first node.

In an embodiment of the present disclosure, the second node may be a donor node connected to the MT and/or the first DU of the first node, and the second node may receive the first indication information sent by the third node, in which the first indication information is configured to indicate the second node to send the TNL configuration information to the first node.

The third node may be a node with which the second DU is configured by the TNL to set up the connection via the transport path between the MT's donor node and the MT.

In some embodiments, the first indication information includes at least one of:
an indication for configuring the TNL configuration information for the first node; or
an identifier of the MT of the first node on the second node.

In an embodiment of the present disclosure, the first indication information includes the indication for configuring the TNL configuration information for the first node.

In an embodiment of the present disclosure, the indication for configuring the TNL configuration information for the first node may be an optional information element (IE), for example, "request of TNL configuration for IAB-DU2". The IE is of an enumeration type, and when being with a value "True", it indicates that a TNL configuration needs to be requested for IAB-DU2.

In an embodiment of the present disclosure, the first indication information includes the identifier of the MT of the first node on the second node.

In an embodiment of the present disclosure, the identifier of the MT of the first node on the second node is NG-RAN node UE XnAP ID, which may also be expressed as Non-F1-Terminating IAB-donor UE XnAP ID, IAB-MT's IAB-donor UE XnAP ID, or IAB-MT's target IAB-donor UE XnAP ID.

In an embodiment of the present disclosure, after the second node receives the first indication information sent by the third node, the second node may obtain the TNL configuration information according to the first indication information and send the TNL configuration information to the first node to implement S152.

At S152, TNL configuration information is sent to the first node, in which the first node includes an MT, a first DU, and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

For relevant description of S152, please refer to relevant description in the above embodiments, which will not be repeated here.

By implementing the embodiments of the present disclosure, the second node receives the first indication information sent by the third node, in which the first indication information is configured to indicate the second node to obtain the TNL configuration information and send the TNL configuration information to the first node. The TNL configuration information is sent to the first node, in which the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the MT and/or the first DU. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

Please refer to FIG. 16, which is a flowchart of another method for setting up a connection according to the embodiments of the present disclosure. It needs to be noted that the method for setting up a connection in the embodiments of the present disclosure may be performed by a second node. The second node may be a donor node of the MT of the first node. As shown in FIG. 16, the method may include but is not limited to S161 and S162.

At S161, in response to the MT being connected to the second node and the first DU being not connected to the second node, first indication information sent by the donor node connected to the first DU is received, in which the first indication information is configured to indicate the second node to send the TNL configuration information to the first node.

In an embodiment of the disclosure, the second node may be the donor node of the MT of the first node, the MT of the first node is connected to the second node, and the first DU is not connected to the second node, that is, the donor node of the first DU is different from the second node.

In this case, the second node may receive the first indication message sent by the donor node connected to the first DU, in which the first indication message is configured to indicate the second node to send the TNL configuration information to the first node.

In some embodiments, the first indication information includes at least one of:
an indication for configuring the TNL configuration information for the first node; or
an identifier of the MT of the first node on the second node.

In an embodiment of the present disclosure, the first indication information includes the indication for configuring the TNL configuration information for the first node.

In an embodiment of the present disclosure, the indication for configuring the TNL configuration information for the first node may be an optional IE, for example, "request of TNL configuration for IAB-DU2". The IE is of an enumeration type, and when being with a value "True", it indicates that a TNL configuration needs to be requested for IAB-DU2.

In an embodiment of the present disclosure, the first indication information includes the identifier of the MT of the first node on the second node.

In an embodiment of the present disclosure, the identifier of the MT of the first node on the second node is NG-RAN node UE XnAP ID, which may also be expressed as Non-F1-Terminating IAB-donor UE XnAP ID, IAB-MT's IAB-donor UE XnAP ID, or IAB-MT's target IAB-donor UE XnAP ID.

In an embodiment of the present disclosure, in a case that the second node is not the donor node of the first DU, after the second node receives the first indication information sent by the donor node connected to the first DU, the second node may obtain the TNL configuration information and send the TNL configuration information to the first node according to the first indication information to implement S162.

At S162, TNL configuration information is sent to the first node, in which the first node includes an MT, a first DU, and a second DU, the TNL configuration information is configured to indicate the second DU to set up a connection with a third node via a transport path between the MT's donor node and the MT, the third node is different from a donor node connected to the first DU, and the second node is a donor node connected to the MT.

For relevant description of S162, please refer to relevant description in the above embodiments, which will not be repeated here.

By implementing the embodiments of the present disclosure, in response to the MT being connected to the second node and the first DU being not connected to the second node, the second node receives first indication information sent by the donor node connected to the first DU, in which the first indication information is configured to indicate the second node to send the TNL configuration information to the first node; and sends the TNL configuration information to the first node, in which the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the MT. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

Please refer to FIG. 17, which is a flowchart of another method for setting up a connection according to the embodiments of the present disclosure. It needs to be noted that the method for setting up a connection in the embodiments of the present disclosure may be performed by a second node. The second node may be a donor node of the first DU of the first node. As shown in FIG. 17, the method may include but is not limited to S171 and S172.

At S 171, in response to the first DU being connected to the second node and the MT being not connected to the second node, first indication information sent by the donor node connected to the MT is received, in which the first indication information is configured to indicate the second node to send the TNL configuration information to the first node.

In an embodiment of the present disclosure, the second node may be the donor node of the first DU of the first node, the first DU of the first node is connected to the second node, and the MT is not connected to the second node, that is, the donor node of the MT is different from the second node.

In this case, the second node may receive the first indication message sent by the donor node connected to the MT, in which the first indication information is configured to indicate the second node to obtain the transport network layer (TNL) configuration information and send the TNL configuration information to the first node.

In some embodiments, the first indication information includes at least one of:
an indication for configuring the TNL configuration information for the first node; or
an identifier of the MT of the first node on the second node.

In an embodiment of the present disclosure, the first indication information includes the indication for configuring the TNL configuration information for the first node.

In an embodiment of the present disclosure, the indication for configuring the TNL configuration information for the first node may be an optional IE, for example, "request of TNL configuration for IAB-DU2". The IE is of an enumeration type, and when being with a value "True", it indicates that a TNL configuration needs to be requested for IAB-DU2.

In an embodiment of the present disclosure, the first indication information includes the identifier of the MT of the first node on the second node.

In an embodiment of the present disclosure, the identifier of the MT of the first node on the second node is NG-RAN node UE XnAP ID, which may also be expressed as Non-F1-Terminating IAB-donor UE XnAP ID, IAB-MT's IAB-donor UE XnAP ID, or IAB-MT's target IAB-donor UE XnAP ID.

In an embodiment of the present disclosure, in a case that the second node is not the donor node of the MT, after the second node receives the first indication information sent by the donor node connected to the MT, the second node may obtain the TNL configuration information and send the TNL configuration information to the first node according to the first indication information to implement S172.

At S172, TNL configuration information is sent to a first node, in which the first node includes the MT, the first DU, and the second DU, the TNL configuration information is configured to indicate the second DU to set up a connection with a third node via a transport path between the MT's donor node and the MT, the third node is different from the donor node connected to the first DU, and the second node is the donor node connected to the first DU.

For relevant description of S172, please refer to relevant description in the above embodiments, which will not be repeated here.

By implementing the embodiments of the present disclosure, in response to the first DU being connected to the second node and the MT being not connected to the second node, the second node receives the first indication information sent by the donor node connected to the MT, in which the first indication information is configured to indicate the second node to send the TNL configuration information to the first node; and sends the TNL configuration information to the first node, in which the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the first DU. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

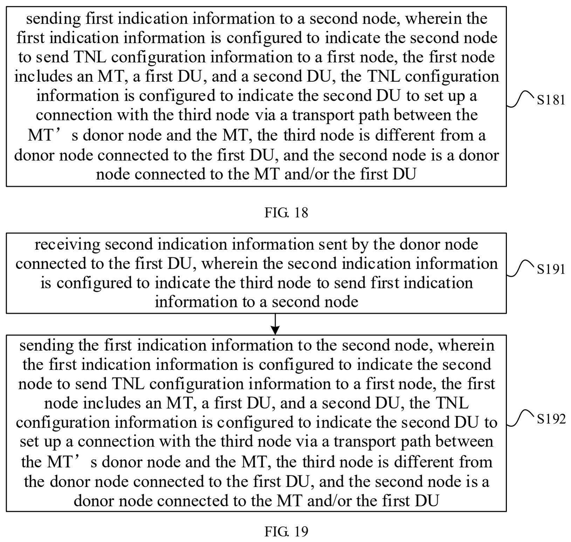

Please refer to FIG. 18, which is a flowchart of another method for setting up a connection according to the embodiments of the present disclosure. It needs to be noted that the method for setting up a connection in the embodiments of the present disclosure may be performed by a third node. The third node may be a node indicated by the TNL configuration information, with which the second DU sets up a connection via a transport path between the MT's donor node and the MT. As shown in FIG. 18, the method may include but is not limited to S181.

At S181, first indication information is sent to a second node, in which the first indication information is configured to indicate the second node to send TNL configuration information to a first node, the first node includes an MT, a first DU, and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

In an embodiment of the present disclosure, the third node may send the first indication message to the second node, in which the second node is the donor node connected to the MT and/or the first DU. The first indication message is configured to indicate the second node to send the TNL configuration information to the first node, the first node includes the MT, the first DU, and the second DU, the TNL configuration information is configured to indicate the second DU to set up the connection with the third node via the transport path between the MT's donor node and the MT, and the third node is different from the donor node connected to the first DU.

In the embodiments of the present disclosure, "a transport path under the donor node" may also be understood as "a transport path in the donor node's topology" or "a child node of a transport path passing the donor node's topology".

The second DU setting up a connection with the third node via the transport path between the MT's donor node and the MT may be that the second DU sets up a connection with the third node via a transport path in the topology of the donor node connected to the MT, or may also be that a transport path used by the second DU to set up the connection with the third node passes a child node of the donor node connected to the MT.

In some embodiments, the first indication information includes at least one of:
an indication for configuring the TNL configuration information for the first node; or
an identifier of the MT of the first node on the second node.

In an embodiment of the present disclosure, the first indication information includes the indication for configuring the TNL configuration information for the first node.

In an embodiment of the present disclosure, the indication for configuring the TNL configuration information for the first node may be an optional IE, for example, "request of TNL configuration for IAB-DU2". The IE is of an enumeration type, and when being with a value "True", it indicates that a TNL configuration needs to be requested for IAB-DU2.

In an embodiment of the present disclosure, the first indication information includes the identifier of the MT of the first node on the second node.

In an embodiment of the present disclosure, the identifier of the MT of the first node on the second node is NG-RAN node UE XnAP ID, which may also be expressed as Non-F1-Terminating IAB-donor UE XnAP ID, IAB-MT's IAB-donor UE XnAP ID, or IAB-MT's target IAB-donor UE XnAP ID.

In an embodiment of the present disclosure, the third node sends the first indication information to the second node, in which the first indication information is configured to indicate the second node to send the TNL configuration information to the first node. Thus, after receiving the first indication information, the second node may obtain the TNL configuration information and send the TNL configuration information to the first node.

The TNL configuration information is configured to indicate the second DU to set up the connection with the third node via the transport path between the MT's donor node and the MT, and the third node is different from the donor node connected to the first DU. Thus, the first node receives the TNL configuration information sent by the second node. The second DU of the first node may then, based on the TNL configuration information, set up the connection with the third node via the transport path between the MT's donor node and the MT, and the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

In some embodiments, the TNL configuration information includes at least one of:
BAP address information;
BH RLC channel information;
BAP routing identifier configuration information;
TNL address information; or
usage indication information.

In some embodiments, the TNL configuration information includes at least one of:
BAP address information, in which the BAP address information is configured to indicate a BAP address of the second DU in the topology of the donor node connected to the MT;
BH RLC channel information, in which the BH RLC channel information is configured to indicate a default BH RLC channel of the second DU in the topology of the donor node connected to the MT;
BAP routing identifier configuration information, in which the BAP routing identifier configuration information is configured to indicate a default BAP routing identifier configuration of the second DU in the topology of the donor node connected to the MT;
TNL address information, in which the TNL address information is configured to indicate a TNL address of the second DU in the topology of the donor node connected to the MT; or
usage indication information, in which the usage indication information is configured to indicate that a TNL configuration is for the second DU.

In some embodiments, the BAP address information is configured to indicate the BAP address for a boundary node in the IAB-donor's topology connected to the MT.

In some embodiments, the BH RLC channel information is used to configure the UL default BH RLC channel of the second DU in the topology of the donor node connected to the MT.

In some embodiments, the BH RLC channel information is used to configure a default BH RLC channel of the second DU for UL F1-C/non-F1 traffic mapping on the target path in the topology of the donor node connected to the MT.

In some embodiments, the BAP routing identifier configuration information is used to configure an UL default BAP routing identifier of the second DU in the topology of the donor node connected to the MT.

In some embodiments, the BAP routing identifier configuration information is used to configure a default BAP routing identifier of the second DU for UL F1-C/non-F1 traffic mapping on the target path in the topology of the donor node connected to the MT.

In some embodiments, the TNL address information is used to configure the TNL address of the second DU in the topology of the donor node connected to the MT.

In an embodiment of the present disclosure, the TNL configuration information includes the BAP address information, in which the BAP address information is configured to indicate the BAP address of the second DU in the topology of the donor node connected to the MT.

In an embodiment of the present disclosure, the TNL configuration information includes the BH RLC channel information, in which the BH RLC channel information is configured to indicate the default BH RLC channel of the second DU in the topology of the donor node connected to the MT.

In an embodiment of the present disclosure, the TNL configuration information includes the BAP routing identifier configuration information, in which the BAP routing identifier configuration information is configured to indicate the default BAP routing identifier configuration of the second DU in the topology of the donor node connected to the MT.

In an embodiment of the present disclosure, the TNL configuration information includes the TNL address information, in which the TNL address information is configured to indicate the TNL address of the second DU in the topology of the donor node connected to the MT.

In an embodiment of the present disclosure, the TNL configuration information includes the usage indication information, where the usage indication information is configured to indicate that the TNL configuration is for the second DU.

In an embodiment of the present disclosure, the usage indication information may be a second DU identifier, which is configured to indicate that the TNL configuration is for the second DU.

It needs to be noted that the above embodiments are not exhaustive and are only examples of some embodiments. The above embodiment may be implemented individually or in a combination with other embodiments. The above embodiments are shown as examples only and shall not be construed as a limitation of a protection scope of the embodiments of the present disclosure.

By implementing the embodiments of the present disclosure, the third node sends the first indication information to the second node, in which the first indication information is configured to indicate the second node to send the TNL configuration information to the first node, the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the MT and/or the first DU. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

Please refer to FIG. 19, which is a flowchart of another method for setting up a connection according to the embodiments of the present disclosure. It needs to be noted that the method for setting up a connection in the embodiments of the present disclosure may be performed by a third node. The third node may be a node indicated by the TNL configuration information, with which the second DU sets up a connection via a transport path between the MT's donor node and the MT. As shown in FIG. 19, the method may include but is not limited to S191 and S192.

At S191, second indication information sent by the donor node connected to the first DU is received, in which the second indication information is configured to indicate the third node to send the first indication information to the second node.

In an embodiment of the present disclosure, the third node may also receive the second indication information sent by the donor node connected to the first DU, in which the second indication information is configured to indicate the third node to send the first indication information to the second node.

In some embodiments, the second indication information includes at least one of:
an indication for configuring the TNL configuration information for the first node;
an identifier of the second node; or
an identifier of the MT of the first node on the second node.

In an embodiment of the present disclosure, the second indication information includes the indication for configuring the TNL configuration information for the first node.

In an embodiment of the present disclosure, the second indication information includes the identifier of the second node.

In an embodiment of the present disclosure, the identifier of the second node is Global NG-RAN node ID, and the third node may send the first indication information to the second node based on the identifier of the second node.

In an embodiment of the present disclosure, the second indication information includes the identifier of the MT of the first node on the second node.

In an embodiment of the present disclosure, after the third node receives the second indication information, based on contents included in the second indication information and contents indicated by the second indication information, the third node may send the first indication information to the second node to implement S192.

At S192, first indication information is sent to a second node, in which the first indication information is configured to indicate the second node to send TNL configuration information to the first node, the first node includes an MT, a first DU, and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

For relevant description of S192, please refer to relevant description in the above embodiments, which will not be repeated here.

By implementing the embodiments of the present disclosure, the third node receives the second indication information sent by the donor node connected to the first DU, in which the second indication information is configured to indicate the third node to send the first indication information to the second node; and sends the first indication information to the second node, in which the first indication information is configured to indicate the second node to send the TNL configuration information to the first node, the first node includes the MT, the first DU, and the second DU, the TNL configuration information is configured to indicate the second DU to set up the connection with the third node via the transport path between the MT's donor node and the MT, the third node is different from the donor node connected to the first DU, and the second node is the donor node connected to the MT and/or the first DU. Thus, the second DU of the first node may set up the connection with the third node via the transport path between the MT's donor node and the MT based on the TNL configuration information, in which the third node is different from the donor node connected to the first DU. Therefore, the second DU of the first node can be supported to set up the connection with the third node via the transport path between the MT's donor node and the MT, and the third node is different from the donor node connected to the first DU. The MT migration and DU migration may be separated, which supports to set up an F1 connection in various scenarios.

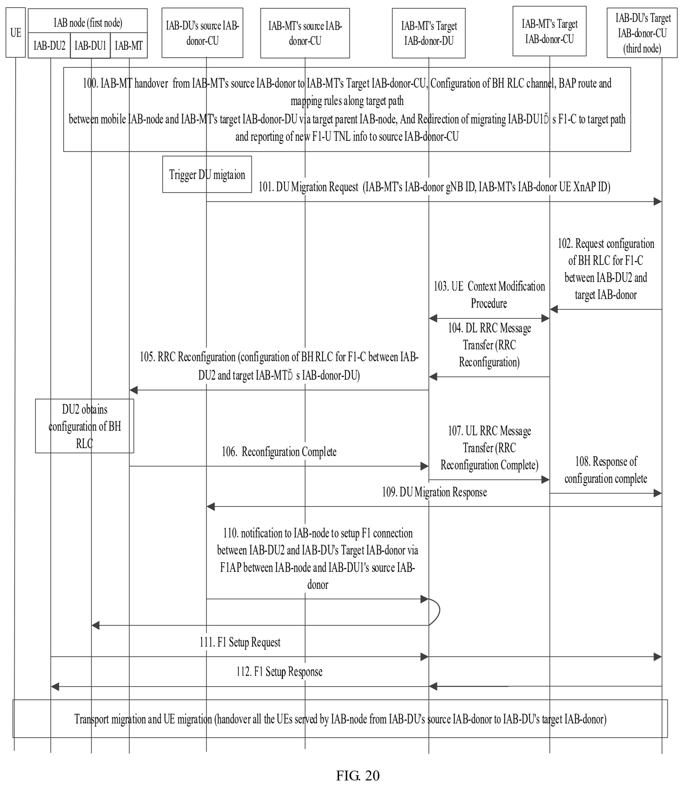

In an exemplary embodiment, as shown in FIG. 20, the embodiment of the present disclosure provides another method for setting up a connection.

Contents irrelevant to the solution is omitted in following steps: in the embodiment of the present disclosure, a description of the method for setting up a connection will be provided by taking the IAB-node as the first node, IAB-DU's target IAB-donor-CU as the third node, and IAB-MT's target IAB-donor-CU and/or IAB-DU's source IAB-donor-CU as the second node as an example.

In the present disclosure, IAB-DU's IAB-donor-CU, IAB-DU's source IAB-donor-CU or IAB-DU's target IAB-donor-CU may be called F1-terminating IAB-donor-CU, source F1-terminating IAB-donor-CU or target F1-terminating IAB-donor-CU; and IAB-MT's IAB-donor-CU, IAB-MT's source IAB-donor-CU or IAB-MT's target IAB-donor-CU may be called non-F1-terminating IAB-donor-CU, source non-F1-terminating IAB-donor-CU or target non-F1-terminating IAB-donor-CU.

At step 100, the IAB-MT hands over from IAB-MT's source IAB-donor-CU to IAB-MT's target IAB-donor-CU, and sets up a target path between IAB-DU1 and IAB-MT's target IAB-donor-DU, and redirects an F1-C connection between IAB-DU1 and IAB-DU's source IAB-donor-CU to the target path.

At step 101, if IAB-DU's source IAB-donor-CU decides to perform a DU migration, IAB-DU's source IAB-donor-CU sends a message for requesting the DU migration to IAB-DU's target IAB-donor-CU, in which the message may be an XnAP message. Optionally, the message for requesting the DU migration includes at least one of:
Global NG-RAN node ID of IAB-MT's IAB-donor-CU; or
XnAP ID of the IAB-MT on IAB-MT's IAB-donor-CU.

At step 102, IAB-DU's target IAB-donor-CU receives the message for requesting the DU migration and, based on the message, sends a message for requesting a TNL configuration to IAB-MT's target IAB-donor-CU, in which the message for requesting the TNL configuration includes the XnAP ID of the IAB-MT on IAB-MT's target IAB-donor-CU.

In some embodiments, the message for requesting the TNL configuration is the XnAP message.

In some embodiments, the TNL configuration information includes a BH RLC configuration and a BAP configuration for a first logical connection.

The first logical connection refers to an F1-C connection between IAB-DU2 and IAB-DU's IAB-donor-CU.

In step 103 to step 107, IAB-MT's target IAB-donor-CU initiates a BH RLC configuration and BAP configuration process.

In step 104 to step 105, IAB-MT's target IAB-donor-CU sends an RRC reconfiguration message to the IAB-MT via IAB-MT's target IAB-donor-DU, and the RRC reconfiguration message includes the TNL configuration information, in which the TNL configuration information includes a BAP address of a boundary node in an IAB-MT's target IAB-donor-CU topology, a default BH RLC channel, and a default BAP routing ID configuration for UL F1-C/non-F1 traffic mapping on the target path. The TNL configuration information may also include a new TNL address of IAB-DU2 on IAB-MT's target IAB-donor-DU.

In some embodiments, the TNL configuration information includes TNL configuration usage indication information, in which the TNL configuration usage indication information is configured to indicate that the TNL configuration is for IAB-DU2.

In the related art, the IAB may receive second TNL configuration information, in which the second TNL configuration information is configured to indicate an F1 connection between IAB-DU1 and IAB-DU's source IAB-donor-CU via a child node in IAB-MT's IAB-donor-CU topology.

It may be understood that the F1 connection between IAB-DU1 and IAB-DU's source IAB-donor-CU via the child node in IAB-MT's IAB-donor-CU topology may also be an F1 connection between IAB-DU1 and IAB-DU's source IAB-donor-CU via a transport path under IAB-MT's IAB-donor-CU.

In an embodiment of the present disclosure, the TNL configuration is different from a second TNL configuration. The second TNL configuration is a TNL configuration of the F1 connection between IAB-DU1 and IAB-DU's source IAB-donor-CU in the IAB-MT's IAB-donor-CU topology, while the TNL configuration information in the present disclosure is a TNL configuration of the F1 connection between IAB-DU2 and IAB-DU's target IAB-donor-CU in IAB-MT's IAB-donor-CU topology.

IAB-MT's IAB-donor-CU may be IAB-MT's target IAB-donor-CU.

In step 106 to step 107, after the IAB-DU2 on the IAB-node obtains the TNL configuration, the IAB-DU2 sends a feedback message to IAB-MT's target IAB-donor-CU via IAB-MT's target IAB-donor-DU, to indicate that the RRC reconfiguration is completed.

At step 108, IAB-MT's target IAB-donor-CU sends a feedback message to IAB-DU's target IAB-donor-CU, in which the feedback message is configured to feedback step 102.

At step 109, IAB-DU's target IAB-donor-CU sends a feedback message to IAB-DU's target IAB-donor-CU, in which the feedback message is configured to feedback step 101.

At step 110, IAB-DU's source IAB-donor-CU notifies the IAB-node to set up the F1 connection between IAB-DU2 and IAB-DU's target IAB-donor-CU.

At step 111, based on the TNL configuration obtained in step 105, the IAB-node sends an F1 setup request message to IAB-DU's target IAB-donor-CU.

At step 112, IAB-DU's target IAB-donor-CU sends an F1 setup response message to IAB-DU2 on the IAB-node.

In an embodiment of the present disclosure, via an information interaction between nodes, the mIAB-node obtains the TNL configuration for setting up the F1 connection, supporting an F1 connection setup process in various scenarios.

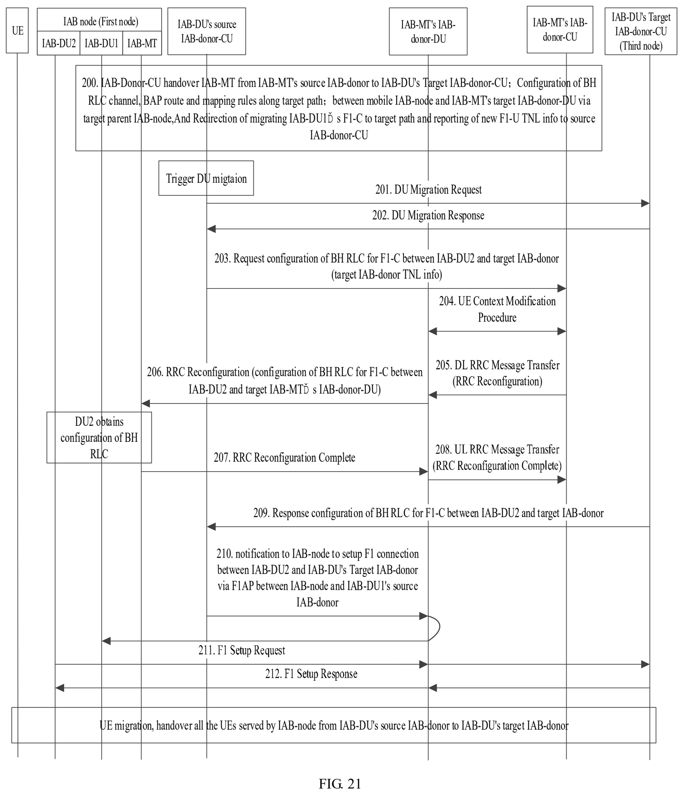

In an exemplary embodiment, as shown in FIG. 21, the embodiment of the present disclosure provide another method for setting up a connection.

Contents irrelevant to the solution is omitted in following steps: in the embodiment of the present disclosure, a description of the method for setting up a connection will be provided by taking the IAB-node as the first node, IAB-DU's target IAB-donor-CU as the third node, and IAB-MT's target IAB-donor-CU and/or IAB-DU's source IAB-donor-CU as the second node as an example.

In the present disclosure, IAB-DU's IAB-donor-CU, IAB-DU's source IAB-donor-CU or IAB-DU's target IAB-donor-CU may be called F1-terminating IAB-donor-CU, source F1-terminating IAB-donor-CU or target F1-terminating IAB-donor-CU; and IAB-MT's IAB-donor-CU, IAB-MT's source IAB-donor-CU or IAB-MT's target IAB-donor-CU may be called non-F1-terminating IAB-donor-CU, source non-F1-terminating IAB-donor-CU or target non-F1-terminating IAB-donor-CU.

Step 200 is the same as step 100, which will not be repeated here.

In step 201 to step 202, IAB-DU's source IAB-donor and IAB-DU's target IAB-donor negotiate a DU migration process. IAB-DU's source IAB-donor obtains a TNL configuration for the F1-C in IAB-DU's target IAB-donor.

The F1-C is a first logical connection between IAB-DU2 and IAB-DU's target IAB-donor.

At step 203, IAB-DU's source IAB-donor sends a message for requesting a TNL configuration to IAB-MT's target IAB-donor-CU. The message for requesting TNL configuration includes an XnAP ID of IAB-MT on IAB-MT's target IAB-donor-CU.

In some embodiments, the message for requesting the TNL configuration is the XnAP message.

In some embodiments, the TNL configuration includes a BH RLC configuration and a BAP configuration for the first logical connection.

Step 204 to Step 208 are the same as Step 103 to Step 107, which will not be repeated here.

At step 209, IAB-MT's target IAB-donor-CU sends a feedback message to IAB-DU's source IAB-donor-CU, in which the feedback message is an XnAP message, and the XnAP message is a message used for feeding back the TNL configuration. The feedback message is used to feedback step 203.

Step 210 to Step 212 are the same as Step 110 to Step 112, which will not be repeated here.

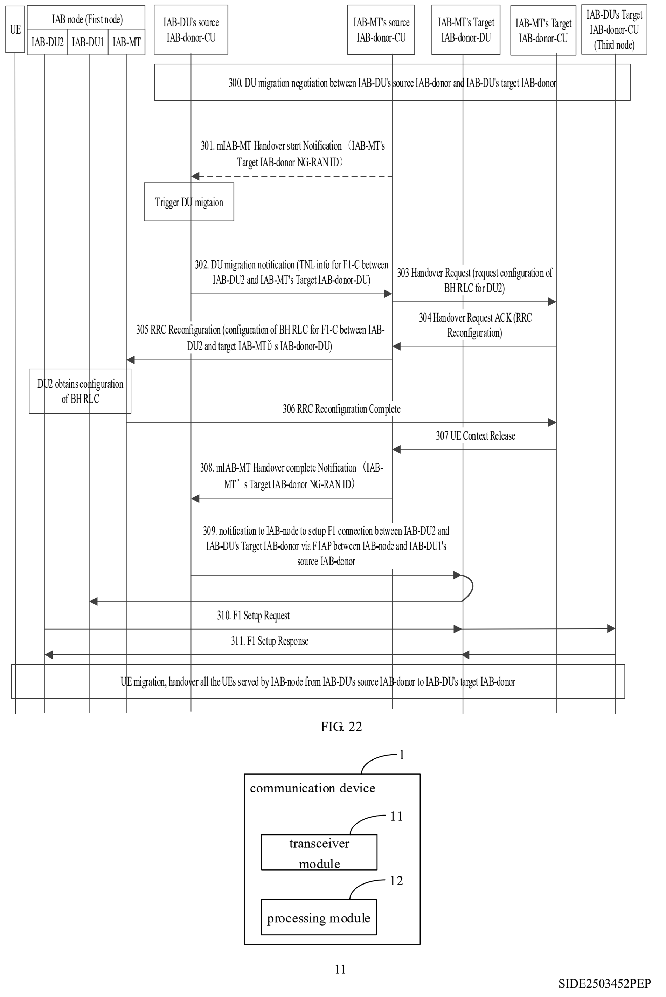

In an exemplary embodiment, as shown in FIG. 22, the embodiment of the present disclosure provide another method for setting up a connection.

Contents irrelevant to the solution is omitted in following steps: in the embodiment of the present disclosure, a description of the method for setting up a connection will be provided by taking the IAB-node as the first node, IAB-DU's target IAB-donor-CU as the third node, and IAB-MT's target IAB-donor-CU and/or IAB-DU's source IAB-donor-CU as the second node as an example.

In the present disclosure, IAB-DU's IAB-donor-CU, IAB-DU's source IAB-donor-CU or IAB-DU's target IAB-donor-CU may be called F1-terminating IAB-donor-CU, source F1-terminating IAB-donor-CU or target F1-terminating IAB-donor-CU; and IAB-MT's IAB-donor-CU, IAB-MT's source IAB-donor-CU or IAB-MT's target IAB-donor-CU may be called non-F1-terminating IAB-donor-CU, source non-F1-terminating IAB-donor-CU or target non-F1-terminating IAB-donor-CU.

At Step 300, IAB-DU's source IAB-donor-CU determines to perform a DU migration and negotiates with IAB-DU's target IAB-donor-CU about the DU migration, and obtains TNL configuration for the F1-C in IAB-DU's target IAB-donor.

At Step 301, if IAB-MT's source IAB-donor-CU decides to indicate an IAB-MT handover, before a handover preparation is made, IAB-MT's source IAB-donor-CU sends handover start notification information to IAB-DU's source IAB-donor-CU, in which the handover start notification information includes NG-RAN ID of IAB-MT's target IAB-donor-CU.

The handover start notification information is included in an XnAP message.

At Step 302, IAB-DU's source IAB-donor-CU sends DU migration notification information to IAB-MT's source IAB-donor-CU, in which the information includes the TNL configuration information for the F1-C in IAB-DU's target IAB-donor.

The DU migration notification information is included in the XnAP message.

At Step 303, IAB-MT's source IAB-donor-CU sends a handover request message to IAB-MT's target IAB-donor-CU, in which the message includes TNL configuration request information of IAB-DU2 and/TNL configuration information for the F1-C in IAB-DU's target IAB-donor.

At Step 304, IAB-MT's target IAB-donor-CU sends a handover request acknowledge message to IAB-MT's source IAB-donor-CU, in which the message includes an RRC reconfiguration message.

Content included in the RRC reconfiguration message is same as described in Step 104, which will not be repeated here.

At Step 305, IAB-MT's source IAB-donor-CU sends the RRC reconfiguration message to the IAB-MT.

At Step 306, the IAB-MT sends an RRC reconfiguration complete message to IAB-MT's target IAB-donor-CU.

At Step 307, IAB-MT's target IAB-donor-CU sends an UE context release message to IAB-MT's source IAB-donor-CU.

At Step 308, IAB-MT's source IAB-donor-CU notifies IAB-DU's source IAB-donor-CU that an IAB-MT handover is completed.

At Step 309, IAB-DU's source IAB-donor-CU notifies the IAB-node to set up an F1 connection between IAB-DU2 and IAB-DU's target IAB-donor-CU.

At Step 310, based on the TNL configuration information obtained in Step 304, the IAB-node sends an F1 setup request message to IAB-DU's target IAB-donor-CU.

At Step 311, IAB-DU's target IAB-donor-CU sends an F1 setup response message to IAB-DU2 on the IAB-node.

In the above embodiments provided by the present disclosure, the method in the embodiments of the present disclosure is introduced from perspectives of the first node, the second node, and the third node.

Please refer to FIG. 23, which is a block diagram of a communication device 1 according to the embodiments of the present disclosure. The communication device 1 shown in FIG. 23 may include a transceiver module 11 and a processing module. The transceiver module may include a sending module and/or a receiving module. The sending module is configured to implement a sending function, the receiving module is configured to implement a receiving function, and the transceiver module may realize the sending function and/or the receiving function.

The communication device 1 may be a first node, a second node or a third node, or may be a device in the first node, the second node or the third node, or may be a device that may be used in combination with the first node, the second node or the third node.

When the communication device 1 is applied to the first node,
the communication device includes a transceiver module 11.

The transceiver module 11 is configured to receive TNL configuration information, in which the first node includes an MT, a first DU, and a second DU, the TNL configuration information is configured to indicate the second DU to set up a connection with a third node via a transport path between the MT's donor node and the MT, and the third node is different from a donor node connected to the first DU.

In some embodiments, the device may also include a processing module.

The processing module 12 is configured to set up a connection with the third node according to the TNL configuration information.

In some embodiments, the transceiver module 11 is further configured to receive TNL configuration information sent by a second node, in which the second node is a donor node connected to the MT and/or the first DU of the first node.

In some embodiments, the transceiver module 11 is further configured to receive an RRC reconfiguration message sent by the second node, in which the RRC reconfiguration message includes the TNL configuration information; or receive an F1AP message sent by the second node, in which the F1AP message includes the TNL configuration information.

In some embodiments, the transceiver module 11 is further configured to receive the RRC reconfiguration message sent by the second node in a process that the MT hands over a connection to the second node; or receive the RRC reconfiguration message sent by the second node after the MT hands over a connection to the second node.

In some embodiments, the TNL configuration information includes at least one of:
BAP address information;
BH RLC channel information;
BAP routing identifier configuration information;
TNL address information; or
usage indication information.

When the communication device 1 is applied to the second node,
the communication device includes a transceiver module 11.

The transceiver module 11 is configured to send TNL configuration information to a first node, in which the first node includes an MT, a first DU, and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

In some embodiments, the transceiver module 11 is further configured to send an RRC reconfiguration message to the MT of the first node, in which the RRC reconfiguration message includes the TNL configuration information; or send an F1AP message to the first DU of the first node, in which the F1AP message includes the TNL configuration information.

In some embodiments, the transceiver module 11 is further configured to send the RRC reconfiguration message to the MT of the first node in a process that the MT of the first node hands over a connection to the second node; or send the RRC reconfiguration message to the MT of the first node after the MT of the first node hands over a connection to the second node.

In some embodiments, the TNL configuration information includes at least one of:
BAP address information;
BH RLC channel information;
BAP routing identifier configuration information;
TNL address information; or
usage indication information.

In some embodiments, the transceiver module 11 is further configured to receive first indication information sent by the third node; or in response to the MT being connected to the second node and the first DU being not connected to the second node, receive first indication information sent by the donor node connected to the first DU; or in response to the first DU being connected to the second node and the MT being not connected to the second node, receive first indication information sent by the donor node connected to the MT, in which the first indication information is configured to indicate the second node to send the TNL configuration information to the first node.

In some embodiments, the first indication information includes at least one of:
an indication for configuring the TNL configuration information for the first node; or
an identifier of the MT of the first node on the second node.

When the communication device 1 is applied to the third node,
the communication device includes a transceiver module 11.

The transceiver module 11 is configured to send first indication information to a second node, in which the first indication information is configured to indicate the second node to send TNL configuration information to a first node, the first node includes an MT, a first DU, and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

In some embodiments, the first indication information includes at least one of:
an indication for configuring the TNL configuration information for the first node; or
an identifier of the MT of the first node on the second node.

In some embodiments, the transceiver module 11 is further configured to receive second indication information sent by the donor node connected to the first DU, in which the second indication information is configured to indicate the third node to send the first indication information to the second node.

In some embodiments, the second indication information includes at least one of:
an indication for configuring the TNL configuration information for the first node;
an identifier of the second node; or
an identifier of the MT of the first node on the second node.

Regarding the communication device 1 in the above embodiments, specific ways in which each module performs an operation have been elaborately described in the embodiments related to the method. Therefore, no detailed explanation will be provided here.

The communication device 1 in the embodiments of the present disclosure achieves same or similar beneficial effects as the method for setting up a connection in some of the above embodiments, which is not repeated here.

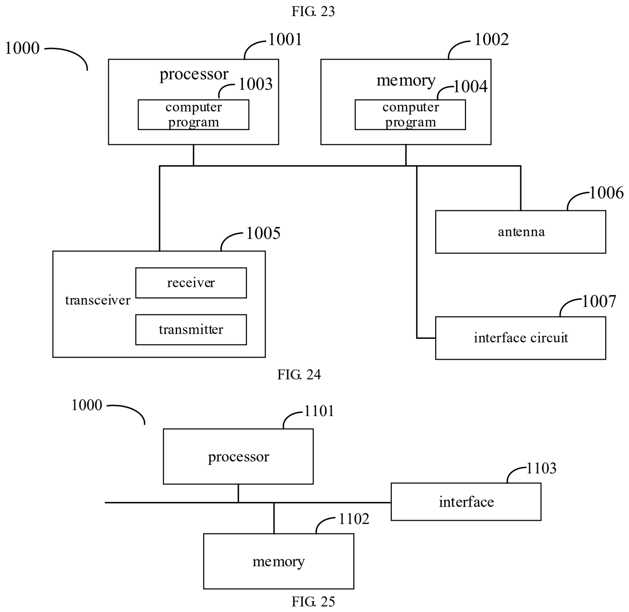

Please refer to FIG. 24, which is a block diagram of another communication device 1000 according to the embodiments of the present disclosure. The communication device 1000 may be a first node, a second node, or a third node, or may be a chip, a chip system, or a processor that supports the first node, the second node, or the third node to implement the above method. This communication device 1000 may be used to implement the method in the above method embodiments, and specific details may be found in explanations of the above method embodiments.

The communication device 1000 may include one or more processors 1001. The processor 1001 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device 1000 may also include one or more memories 1002 on which a computer program 1004 is stored. When the computer program 1004 is executed by the memory 1002, the communication device 1000 implements the method in the above method embodiments. Optionally, the memory 1002, may also store data. The communication device 1000 and the memory 1002 may be set separately or integrated together.

Optionally, the communication device 1000 may also include a transceiver 1005 and an antenna 1006. The transceiver 1005 may be called a transceiving unit, a transceiving machine, or a transceiving circuit, etc., to achieve a transceiving function. The transceiver 1005 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication device 1000 includes one or more interface circuits 1007. The interface circuit 1007 is configured to receive code instructions and transmit the code instructions to the processor 1001. When the code instructions are running on the processor 1001, the communication device 1000 is caused to implement the method in the above method embodiments.

When the communication device 1000 is the first node, the transceiver 1005 is configured to implement S121 in FIG. 12; S131 in FIG. 13; and the processor 1001 is configured to implement S132 in FIG. 13.

When the communication device 1000 is the second node, the transceiver 1005 is configured to implement S141 in FIG. 14; S151 and S152 in FIG. 15; S161 and S162 in FIG. 16; and S171 and S172 in FIG. 17.

When the communication device 1000 is the third node, the transceiver 1005 is configured to implement S181 in FIG. 18; S191 and S192 in FIG. 19.

In an implementation, the processor 1001 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 1001 may store a computer program 1003. When the computer program 1003 is running on the processor 1001, the communication device 1000 is caused to implement the method in the above method embodiments. The computer program 1003 may be solidified in the processor 1001. In this way, the processor 1001 may be implemented in hardware.

In an implementation, the communication device 1000 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a first node, a second node, or a third node, but the scope of the communication device in the present disclosure is not limited to this, and the structure of the communication device may not be restricted by FIG. 24. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For a case where the communication device may be a chip or a chip system, please refer to FIG. 25, which is a block diagram of a chip according to the embodiments of the present disclosure.

The chip 1100 includes a processor 1101 and an interface 1103. There may be one or more processors 1101, and there may be one or more interfaces 1103.

For a case where the chip is configured to implement the function of the first node in the embodiments of the present disclosure,
the interface 1103 is configured to receive code instructions and transmit the code instructions to the processor; and
the processor 1101 is configured to run the code instructions to implement the method for setting up a connection in some of the above embodiments.

For a case where the chip is configured to implement the function of the second node in the embodiments of the present disclosure,
the interface 1103 is configured to receive code instructions and transmit the code instructions to the processor; and
the processor 1101 is configured to run the code instructions to implement the method for setting up a connection in some of the above embodiments.

For a case where the chip is configured to implement the function of the third node in the embodiments of the present disclosure,
the interface 1103 is configured to receive code instructions and transmit the code instructions to the processor; and
the processor 1101 is configured to run the code instructions to implement the method for setting up a connection in some of the above embodiments.

Optionally, the chip 1100 further includes a memory 1102 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

Embodiments of the present disclosure also provide a system for setting up a connection. The system includes a communication device as a first node, a communication device as a second node, and a communication device as a third node. Or, the system includes a communication device as a first node, a communication device as a second node, and a communication device as a third node.

The present disclosure also provides a computer-readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Depending on the context, words "if" and "in case that" used here may be interpreted as "when", "while", or "in response to determining...".

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for setting up a connection, performed by a first node, comprising:
receiving transport network layer (TNL) configuration information, wherein the first node comprises a mobile terminal (MT), a first distributed unit (DU), and a second DU, the TNL configuration information is configured to indicate the second DU to set up a connection with a third node via a transport path between the MT's donor node and the MT, and the third node is different from a donor node connected to the first DU.

2. The method of claim 1, further comprising:
setting up a connection with the third node according to the TNL configuration information.

3. The method of claim 1 or 2, wherein receiving the TNL configuration information comprises:
receiving the TNL configuration information sent by a second node, wherein the second node is a donor node connected to the MT and/or the first DU of the first node.

4. The method of claim 3, wherein receiving the TNL configuration information sent by the second node comprises:
receiving a radio resource control (RRC) reconfiguration message sent by the second node, wherein the RRC reconfiguration message comprises the TNL configuration information; or
receiving an F1 application protocol (F1AP) message sent by the second node, wherein the F1AP message comprises the TNL configuration information.

5. The method of claim 4, wherein receiving the RRC reconfiguration message sent by the second node comprises:
receiving the RRC reconfiguration message sent by the second node in a process that the MT hands over to the second node; or
receiving the RRC reconfiguration message sent by the second node after the MT hands over to the second node.

6. The method of any one of claims 1 to 5, wherein the TNL configuration information comprises at least one of:
backhaul adaptation protocol (BAP) address information;
backhaul radio link control (BH RLC) channel information;
BAP routing identifier configuration information;
TNL address information; or
usage indication information.

7. A method for setting up a connection, performed by a second node, comprising:
sending transport network layer (TNL) configuration information to a first node, wherein the first node comprises a mobile terminal (MT), a first distributed unit (DU), and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

8. The method of claim 7, wherein sending the TNL configuration information to the first node comprises:
sending a radio resource control (RRC) reconfiguration message to the MT of the first node, wherein the RRC reconfiguration message comprises the TNL configuration information; or
sending an F1 application protocol (F1AP) message to the first DU of the first node, wherein the F1AP message comprises the TNL configuration information.

9. The method of claim 8, wherein sending the RRC reconfiguration message to the MT of the first node comprises:
sending the RRC reconfiguration message to the MT of the first node in a process that the MT of the first node hands over to the second node; or
sending the RRC reconfiguration message to the MT of the first node after the MT of the first node hands over to the second node.

10. The method of any one of claims 7 to 9, wherein the TNL configuration information comprises at least one of:
backhaul adaptation protocol (BAP) address information;
backhaul radio link control (BH RLC) channel information;
BAP routing identifier configuration information;
TNL address information; or
usage indication information.

11. The method of any one of claims 7 to 10, further comprising:
receiving first indication information sent by the third node; or
in response to the MT being connected to the second node and the first DU being not connected to the second node, receiving first indication information sent by the donor node connected to the first DU; or
in response to the first DU being connected to the second node and the MT being not connected to the second node, receiving first indication information sent by the donor node connected to the MT,
wherein the first indication information is configured to indicate the second node to send the TNL configuration information to the first node.

12. The method of claim 11, wherein the first indication information comprises at least one of:
an indication for configuring the TNL configuration information for the first node; or
an identifier of the MT of the first node on the second node.

13. A method for setting up a connection, performed by a third node, comprising:
sending first indication information to a second node, wherein the first indication information is configured to indicate the second node to send transport network layer (TNL) configuration information to a first node, the first node comprises a mobile terminal (MT), a first distributed unit (DU), and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

14. The method of claim 13, wherein the first indication information comprises at least one of:
an indication for configuring the TNL configuration information for the first node; or
an identifier of the MT of the first node on the second node.

15. The method of claim 13 or 14, wherein the TNL configuration information comprises at least one of:
backhaul adaptation protocol (BAP) address information;
backhaul radio link control (BH RLC) channel information;
BAP routing identifier configuration information;
TNL address information; or
usage indication information.

16. The method of any one of claims 13 to 15, further comprising:
receiving second indication information sent by the donor node connected to the first DU, wherein the second indication information is configured to indicate the third node to send the first indication information to the second node.

17. The method of claim 16, wherein the second indication information comprises at least one of:
an indication for configuring the TNL configuration information for the first node;
an identifier of the second node; or
an identifier of the MT of the first node on the second node.

18. A communication device, applied to a first node, comprising:
a transceiver module, configured to receive transport network layer (TNL) configuration information, wherein the first node comprises a mobile terminal (MT), a first distributed unit (DU), and a second DU, the TNL configuration information is configured to indicate the second DU to set up a connection with a third node via a transport path between the MT's donor node and the MT, and the third node is different from a donor node connected to the first DU.

19. A communication device, applied to a second node, comprising:
a transceiver module, configured to send transport network layer (TNL) configuration information to a first node, wherein the first node comprises a mobile terminal (MT), a first distributed unit (DU), and a second DU, the TNL configuration information is configured to indicate the second DU to set up a connection with a third node via a transport path between the MT's donor node and the MT, the third node is different from a donor node connected to the first DU, and the second node is a donor node connected to the MT and/or the first DU.

20. A communication device, applied to a third node, comprising:
a transceiver module, configured to send first indication information to a second node, wherein the first indication information indicates the second node to send transport network layer (TNL) configuration information to a first node, the first node comprises a mobile terminal (MT), a first distributed unit (DU), and a second DU, the TNL configuration information is configured to indicate the second DU to set up a connection with the third node via a transport path between the MT's donor node and the MT, the third node is different from a donor node connected to the first DU, and the second node is a donor node connected to the MT and/or the first DU.

21. A communication device, comprising a processor and a memory for storing computer programs, wherein the processor is configured to execute the computer programs stored in the memory, to cause the device to implement the method of any one of claims 1 to 6, or the method of any one of claims 7 to 12, or the method of any one of claims 13 to 17.

22. A communication device, comprising a processor and an interface circuit; wherein
the interface circuit is configured to receive code instructions and transmit the code instructions to the processor; and
the processor is configured to run the code instructions to implement the method of any one of claims 1 to 6, or the method of any one of claims 7 to 12, or the method of any one of claims 13 to 17.

23. A computer-readable storage medium for storing instructions, wherein when the instructions are executed, the method of any one of claims 1 to 6, or the method of any one of claims 7 to 12, or the method of any one of claims 13 to 17 is implemented.
